(19) Europäisches Patentamt
European Patent Office
Office européen des brevets

(11) EP 2 187 649 A1

(12) EUROPEAN PATENT APPLICATION
published in accordance with Art. 153(4) EPC

(43) Date of publication:
19.05.2010  Bulletin 2010/20

(51) Int Cl.:
H04N 7/32 (2006.01)          H04N 1/41 (2006.01)

(21) Application number: 08837884.9

(22) Date of filing: 10.10.2008

(86) International application number:
PCT/JP2008/002887

(87) International publication number:
WO 2009/047917 (16.04.2009 Gazette 2009/16)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 11.10.2007 EP 07019946

(71) Applicant: Panasonic Corporation
Kadoma-shi
Osaka 571-8501 (JP)

(72) Inventors:
• WITTMANN, Steffen
63225 Langen
(DE)
• WEDI, Thomas, Dr.
63225 Langen (DE)

(74) Representative: Grünecker, Kinkeldey,
Stockmair & Schwanhäusser
Anwaltssozietät
Leopoldstrasse 4
80802 München (DE)

(54) VIDEO CODING METHOD AND VIDEO DECODING METHOD

(57) A video coding method and a video coding device can optimize prediction efficiency and coding efficiency.

A video coding device (100) codes video data, by performing motion compensation with sub-pel resolution by using an adaptive interpolation filter for calculating a pixel value of a sub pixel for interpolation between full pixels configuring an input image included in the video data. The video coding device (100) includes: a motion compensation unit (160) that (i) sets a filter property for an adaptive interpolation filter on a predetermined process unit basis, and determining, for each of sub-pel positions relative to a full pixel, a plurality of filter coefficients of the adaptive interpolation filter having the set filter property, and (ii) performs the motion compensation with sub-pel resolution, by applying the adaptive interpolation filter having the determined filter coefficients to the input image; and a subtraction unit (110) that generates a prediction error, by subtracting, from the input image, a prediction image generated in the motion compensation; and a coding unit (190) that codes the prediction error.

FIG. 1

EP 2 187 649 A1

**Description**

**Technical Field**

The present invention relates to video coding methods and video decoding methods, and more particularly to a video coding method and a video decoding method using an adaptive interpolation filter based on motion-compensation prediction with sub-pel (fractional-pel or decimal-pel) resolution.

**Background Art**

Hybrid video coding technologies apply motion-compensation prediction followed by transform coding of the resulting prediction error. Especially for motion vectors with sub-pel resolution, effects like aliasing, quantization errors, errors from inaccurate motion estimation, camera noise, and the like limit the prediction efficiency of motion compensation. The concept of adaptive interpolation filtering addresses these effects.

Experiments showed that it may be useful to apply a separable or a non-separable adaptive interpolation filter depending on the signal characteristics. Furthermore, on the one hand it may be useful to apply symmetric filters in order to reduce the amount of overhead data for transmission of filter coefficients. On the other hand it may be necessary to apply non-symmetric filters in order to obtain the optimal interpolated signal that is used for prediction and thus to achieve the highest coding efficiency gains.

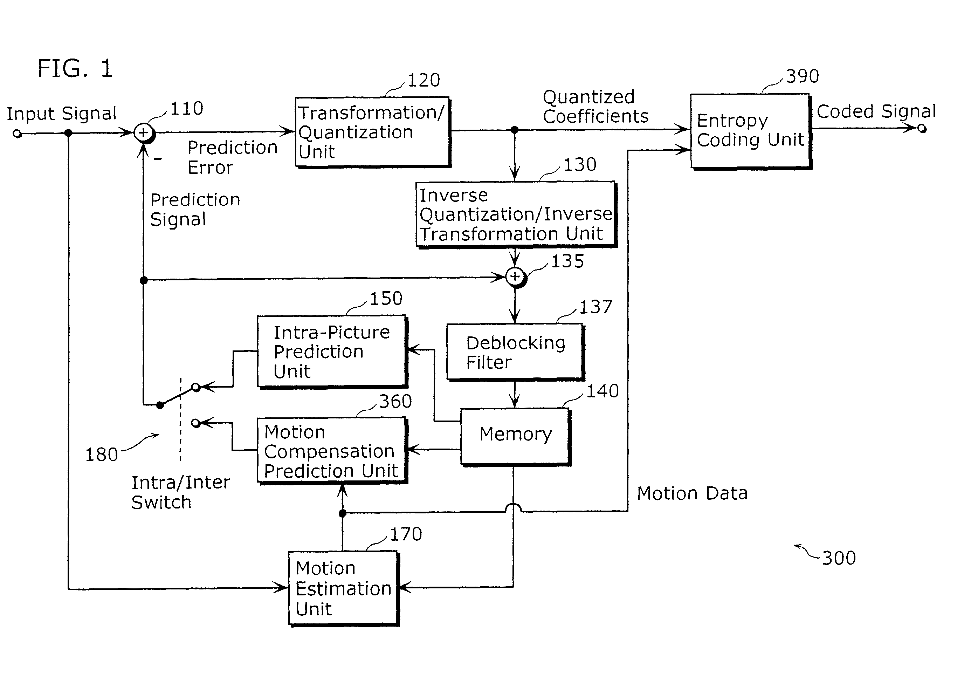

FIG. 1 is a block diagram illustrating an example of a structure of a conventional video encoder. The video encoder 300 in FIG. 1 includes a subtractor 110 that determines a difference between (a) a current block in input image (input signals) and (b) a prediction signal of the current block which is based on previously coded and decoded blocks stored in a memory 140. More specifically, the input image is divided into macroblocks according to H.264/AVC standard. The video encoder 300 employs Differential Pulse Code Modulation (DPCM) technique for transmitting only a difference between (a) a current block in an input video sequence as input image and (b) a prediction signal which is based on previously coded and decoded blocks (locally decoded image). The subtractor 110 receives the coded current block and subtracts the prediction signal from the received current block, thereby calculating the difference (hereinafter, referred to also as a "prediction error").

A transformation/quantization unit 120 transforms the resulting prediction error from the spatial domain to the frequency domain and quantizes the obtained transform coefficients.

The locally decoded image is generated by a decoding unit embedded in the video encoder 300. The decoding unit includes an inverse quantization/inverse transformation unit 130, an adder 135, and a deblocking filter 137. The decoding unit performs the decoding in a reverse order of the coding steps. More specifically, the inverse quantization/ inverse transformation unit 130 inversely quantizes the quantized coefficients and applies an inverse transformation to the inversely-quantized coefficients. In the adder 135, the decoded differences are added to the prediction signal to form the locally decoded image. Further, the deblocking filter 137 reduces blocking artifacts in the decoded image.

The type of prediction that is employed by the video encoder 300 depends on whether the macroblocks are coded in "Intra" or "Inter" mode. In "Intra" mode the video, coding standard H.264/AVC uses a prediction scheme based on already coded macroblocks of the same image in order to predict subsequent macroblocks. In "Inter" mode, motion compensation prediction between corresponding blocks of several consecutive frames is employed.

Only Intra-coded images (I-type images) can be decoded without reference to any previously decoded image. The I-type images provide error resilience (ability of recovering from error) for the coded video sequence. Further, entry points into bitstreams of coded data are provided by the I-type images in order to enable a random access, namely, to access I-type images within the sequence of coded video images. A switch between Intra-mode (namely, a processing by the Intra-frame prediction unit 150) and Inter-mode (namely, a processing by the motion compensation prediction unit 360) is controlled by an Intra/Inter switch 180.

In "Inter" mode, a macroblock is predicted from corresponding blocks of previous pictures by employing motion compensation. The estimation is accomplished by a motion estimator unit 170, receiving the current input signal and the locally decoded image. Motion estimation yields two-dimensional motion vectors, representing a pixel displacement (motion) between the current block and the corresponding block in previous pictures. Based on the estimated motion, the motion compensation prediction unit 360 provides a prediction signal.

In order to optimize prediction accuracy, motion vectors may be determined at sub-pel resolution, such as half-pel or quarter-pel resolution (see Patent Reference 1). A motion vector with sub-pel resolution may point to a position within a previous picture where no pixel value is available, namely, a sub-pel position. Hence, spatial interpolation of pixel values is needed in order to perform motion compensation. According to the H.264/AVC standard, a 6-tap Wiener interpolation filter with fixed filter coefficients and a bilinear filter are applied in order to obtain pixel values for sub-pel positions. The interpolation process is done as follows:

1. The half-pel positions are calculated using the 6-tap filter horizontally and vertically.

2. The quarter-pel positions are calculated using bilinear filtering applying the already computed half-pel values as well as the existing full-pel (integer-pel) values.

As the filter coefficients are fixed, the video decoder can identify the filter coefficients. Therefore, no overhead data is necessary to transmit the filter coefficients to the video decoder.

For both the "Intra" and the "Inter" coding mode, the differences between the current signal and the prediction signal are transformed into the transform coefficients by the transformation/quantization unit 120. Generally, an orthogonal transformation such as a two-dimensional Discrete Cosine Transformation (DCT) or an integer version thereof is employed.

The transform coefficients are quantized in order to reduce the amount of data that has to be coded. The step of quantization is controlled by quantization tables that specify the precision and therewith the number of bits that are used to code each frequency coefficient. Lower frequency components are usually more important for image quality than fine details so that more bits are spent for coding the low frequency components than for the higher ones.

After quantization, the two-dimensional array of transform coefficients has to be converted into a one-dimensional string to pass it to an entropy coding unit 390. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code, VLC). The code is optimized to assign shorter code words to most frequent run-level pairs occurring in typical video images. The resulting bitstream is multiplexed with the motion information and stored on a recording medium or transmitted to the video decoder side.

For reconstructing the coded images at the video decoder side based on the bitstream transmitted from the video encoder side, the decoding processes are applied in reverse manner of the coding processes.

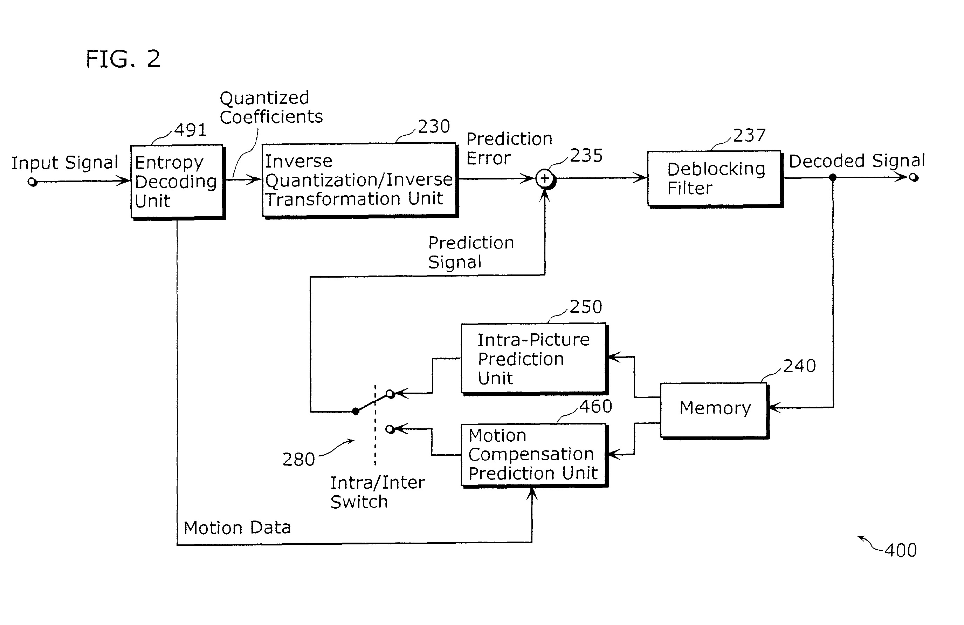

FIG. 2 is a block diagram illustrating an example of a structure of a conventional video decoder. In the video decoder 400 of FIG. 2, first the entropy coding of transform coefficients and motion data is reversed in an entropy decoding unit 491. This step also involves an inverse scanning in order to convert the sequence of decoded transform coefficients into a two-dimensional block of data as it is required for the inverse transformation. The decoded block of transform coefficients is then submitted to an inverse quantization/inverse transformation unit 230 and the decoded motion data is sent to a motion compensation prediction unit 460. Depending on the actual value of the motion vector, interpolation of pixel values may be needed in order to perform motion compensation. The result of the inverse quantization and inverse transformation contains prediction differences and is added by an adder 235 to the prediction signal stemming from the motion compensation prediction unit 460 in Inter-mode or stemming from an Intra-picture prediction unit 250 in Intra-mode. The reconstructed image is passed through a deblocking filter 237 and the decoded signal generated by the deblocking filter 237 is stored in memory 140 to be applied to the intra-picture prediction unit 150 and the motion compensation prediction unit 460.

As described above, the conventional video encoder 300 can perform motion compensation with high accuracy using an interpolation filter having fixed filter coefficients, and thereby code the input image based on high-accuracy prediction. Furthermore, the conventional video decoder 400 can reconstruct images coded based on high-accuracy prediction.

Furthermore, for standards following H. 264/AVC, in order to improve prediction accuracy and compression efficiency, it is examined that a predetermined interpolation filter (non-adaptive interpolation filter) is replaced by an adaptive interpolation filter that can adaptively vary depending on statistical properties of target video. As explained above, coding efficiency critically depends on prediction accuracy, which in turn depends on the accuracy of motion estimation and compensation. The accuracy of motion compensation may be improved by replacing the fixed interpolation filters employed by the motion compensation prediction unit 360 by interpolation filters that adapt to the statistical properties of images in the video.

So far, there are two main implementations of the adaptive interpolation filter, namely, implementations based on separable or non-separable filters. The separable filter can be separated into two one-dimensional interpolation filters. The consecutive application of the two one-dimensional interpolation filters produces the same effects as that of the application of the non-separable filter. The non-separable filter is a two-dimensional interpolation filter which cannot be separated into one-dimensional filters.

Both implementations provide improved coding efficiency, because the filters can be adapted to the invariant statistics of the image. Besides this general advantage, each implementation has its own advantages and disadvantages in terms of computational complexity and coding efficiency, which are summarized in the following :

Separable adaptive interpolation filters have a lower number of independent filter coefficients than non-separable filters, resulting in reduced computational complexity for applying and coding the filters. However, this also implies a reduced number of degrees of freedom and thus fewer possibilities to improve the prediction efficiency compared to non-separable filters. This may lead to a lower coding efficiency than with a non-separable filter.

Non-separable adaptive interpolation filters have a higher degree of freedom than that of separable adaptive interpolation filters, thereby further improving prediction efficiency and coding efficiency. However, non-separable adaptive interpolation filters have a higher number of independent filter coefficients than separable filters, resulting in increased computational complexity.

Therefore, if a user designates one of the two types, both implementations provide a benefit depending on the user's demand. If an implementation can spend some computational complexity by applying non-separable filtering, it can obtain optimal prediction efficiency. If an implementation has to safe computational complexity, it will apply a separable filter resulting in a possibly non-optimal prediction.

[Patent Reference 1] US Patent Application Publication No. 2006/0294171

**Disclosure of Invention**

**Problems that Invention is to Solve**

However, the above-described conventional technologies have a problem of failing to optimize prediction efficiency and coding efficiency.

In the above-described conventional technologies, filter types are fixed even if filter coefficients can be adaptively changed. On the other hand, even if filter types such as adaptive/non-adaptive or separable/non-separable can be adaptively changed, filter coefficients and the number of taps of the filter are fixed. Therefore, the above-described conventional technologies cannot optimize prediction efficiency and coding efficiency.

In order to address the above problem, an object of the present invention is to provide a video coding method, a video decoding method, a device using any one of the methods, by each of which prediction efficiency and coding efficiency can be optimized.

**Means to Solve the Problems**

In accordance with an aspect of the present invention for achieving the object, there is provided a video coding method of coding video data, by performing motion compensation with sub-pel resolution by using an adaptive interpolation filter for calculating a pixel value of a sub pixel for interpolation between full pixels configuring an input image included in the video data, the video coding method including: setting a filter property for an adaptive interpolation filter on a predetermined process unit basis, and determining, for each of sub-pel positions relative to a full pixel, a plurality of filter coefficients of the adaptive interpolation filter having the filter property set in the setting; performing the motion compensation with sub-pel resolution, by applying the adaptive interpolation filter to the input image, the adaptive interpolating filter having the filter coefficients determined in the determining; generating a prediction error, by calculating a difference between the input image and a prediction image generated in the performing of the motion compensation; and coding the prediction error generated in the generating.

By the above method, the filter property and the filter coefficients can be adaptively determined at the same time. As a result, prediction efficiency and coding efficiency can be optimized.

Further, the coding of the prediction error may further include coding the filter property that is set in the setting.

By the above method, the filter property can be multiplexed to a coded bitstream. As a result, a video decoder side that receives the coded bitstream can decode the coded bitstream correctly.

Furthermore, the filter property may be information indicating a filter type of the adaptive interpolation filter, and the coding of the prediction error may further include coding information, the information indicating at least one of: whether the filter type of the adaptive interpolation filter is adaptive or non-adaptive; whether the filter type is separable or non-separable; and whether the filter type is symmetry or asymmetry, the filer type being set in the setting.

By the above method, when, for example, the interpolation filter for which the filter property is set is a separable interpolation filter, motion compensation can be performed with high accuracy although calculation is complicated, in other words, although coding efficiency is decreased. On the other hand, when the interpolation filter for which the filter property is set is a non-separable interpolation filter, calculation is simplified and thereby a data amount to be coded can be reduced, although a flexibility of prediction is restricted. Furthermore, when the interpolation filter for which the filter property is set is an asymmetry filter, motion compensation can be performed with high accuracy although calculation is complicated, in other words, although coding efficiency is decreased. On the other hand, when the interpolation filter for which the filter property is set is a symmetry filter, a data amount to be coded can be reduced, thereby increasing coding efficiency.

Still further, the coding of the prediction error may further include coding the filter coefficients determined in the determining of a plurality of filter coefficients.

By the above method, the filter coefficients can be multiplexed to a coded bitstream. Thereby, a video decoder side that receives the coded bitstream can perform motion compensation more correctly based on the received filter coefficients and filter property. As a result, an original image can be reconstructed from the coded bitstream.

Still further, the coding of the prediction error may include coding the filter coefficients except redundancies between the filter coefficients, by exploiting symmetry between the filter coefficients.

By the above method, coding efficiency can be increased more.

Still further, the coding of the prediction error may include coding a difference between filter coefficients of adaptive interpolation filters of at least two sub pixels that have a symmetry relation with respect to at least one predetermined axis.

In general, when positions of sub pixel (sub-pel positions) have a symmetry relation with each other, interpolation filters of the respective sub pixels have a mirror relation and their symmetry filter coefficients often have the same values or similar values. Therefore, if a difference between the symmetry filter coefficients is calculated and coded, it is possible to significantly reduce a data amount to be coded.

Still further, the coding of the prediction error may include coding a difference between filter coefficients of adaptive interpolation filters of at least two sub pixels that have a symmetry relation with translation.

In general, when sub-pel positions have a symmetry relation with translation, interpolation filters of the symmetry sub pixels are often identical or similar. In other words, filter coefficients of the symmetry interpolation filters often have the same values or similar values. Therefore, if a difference between the symmetry filter coefficients is calculated and coded, it is possible to significantly reduce a data amount to be coded.

Still further, the coding of the prediction error may include coding a difference between at least two filter coefficients having a symmetry relation among the filter coefficients, when the filter type of the adaptive interpolation filter is symmetry.

By the above method, when an interpolation filter itself is symmetry, two filter coefficients having a symmetry relation with each other have the same values or similar values. Therefore, if a difference between the symmetry filter coefficients is calculated and coded, it is possible to significantly reduce a data amount to be coded.

Still further, the coding of the prediction error may include coding a plurality of filter coefficients of an adaptive interpolation filter of one of at least two sub pixels that have a symmetry relation with respect to at least one predetermined axis.

As described above, when sub-pel positions have a symmetry relation with each other, interpolation filters of the respective sub pixels have a mirror relation and their symmetry filter coefficients often have the same values or similar values. Therefore, filter coefficients of only one of the symmetry interpolation filters are to be determined. As a result, it is possible to reduce a calculation amount related to determination of filter coefficients, and also possible to significantly reduce a data amount to be coded. Another interpolation filter having the symmetry relation to the determined interpolation filter for which the filter coefficients are determined can be determined as an interpolation filter having the mirror relation with the determined interpolation filter.

Still further, the coding of the prediction error may include coding one filter coefficient of at least two filter coefficients having a symmetry relation among the filter coefficients, when the filter type of the adaptive interpolation filter is symmetry.

As described above, when an interpolation filter itself is symmetry, two filter coefficients having a symmetry relation with each other have the same values or similar values. Therefore, only one of the symmetry filter coefficients is to be determined. As a result, it is possible to reduce a calculation amount related to determination of filter coefficients, and also possible to significantly reduce a data amount to be coded. The other filter coefficient having the symmetry relation with the determined filter coefficient can be considered as being the same as the determined filter coefficient.

Still further, the filter property may be information indicating a size of the adaptive interpolation filter, and the coding of the prediction error may further include coding information that indicates a size of the adaptive interpolation filter, the size being set in the setting.

By the above method, information indicating a size of an interpolation filter can be multiplexed to a coded bitstream. As a result, a video decoder side that receives the coded bitstream can decode the coded bitstream correctly.

Still further, in the determining of a plurality of filter coefficients, the filter property for the adaptive interpolation filter may be set on a slice-by-slice basis.

Still further, in the setting, only one filter property for the adaptive interpolation filter may be set for the video data entirely.

In accordance with another aspect of the present invention, there is provided a video decoding method of decoding a coded stream, by performing motion compensation with sub-pel resolution by using an adaptive interpolation filter for calculating a pixel value of a sub pixel for interpolation between full pixels configuring a reconstructed image reconstructed from the coded stream, the video decoding method including: decoding a coded prediction error included in the coded stream; setting a filter property for an adaptive interpolation filter on a predetermined process unit basis, and determining, for each of sub-pel positions relative to a full pixel, a plurality of filter coefficients of the adaptive interpolation filter having the filter property set in the setting; performing motion compensation with sub-pel resolution, by applying the adaptive interpolation filter to a reconstructed image that is previously generated, the adaptive interpolating filter having the filter coefficients determined in the determining; and generating a reconstructed image, by adding a prediction image that is generated in the performing of motion compensation with the coded prediction error that is decoded in the decoding of a coded prediction error.

By the above method, motion compensation with sub-pel resolution can result in a reconstructed image with higher accuracy.

Further, the decoding of a coded prediction error may further include decoding the filter property for each of adaptive interpolation filters included in the coded stream, and in the determining of a plurality of filter coefficients, the filter coefficients may be determined for each of the sub-pel positions relative to the full pixel, according to the filter property that is decoded in the decoding of the filter property.

By the above method, the filter property can be reconstructed from the coded stream. Thereby, it is possible to obtain information regarding the filter property of the interpolation filter that has been used to perform motion compensation for coded video. As a result, the reconstructed image can be generated with higher accuracy.

Furthermore, the decoding of a coded prediction error may include decoding information, the information indicating at least one of: whether a filter type of the adaptive interpolation filter is adaptive or non-adaptive; whether the filter type is separable or non-separable; and whether the filter type is symmetry or asymmetry, and in the determining of a plurality of filter coefficients, the filter coefficients may be determined for each of the sub-pel positions relative to the full pixel, according to the filter type of the adaptive interpolation filter.

Still further, the decoding of a coded prediction error may further include decoding a plurality of filter coefficients of each of the adaptive interpolation filters included in the coded stream, and in the determining of a plurality of filter coefficients, filter coefficients that are previously decoded in the decoding of a plurality of filter coefficients may be determined as the filter coefficients determined for each of the sub-pel positions relative to the full pixel.

By the above method, the filter coefficients can be reconstructed from the coded stream. Thereby, it is possible to obtain information regarding filter property of video to be coded and regarding a value of a filter coefficient of an interpolation filter used to perform motion compensation. As a result, the reconstructed image can be generated correctly.

Still further, the decoding of a coded prediction error may include decoding the filter coefficients from the coded stream, by exploiting symmetry between the filter coefficients, the coded stream having the filter coefficients that are coded except redundancies between the filter coefficients, and in the determining of a plurality of filter coefficients, the filter coefficients decoded in the decoding of a coded prediction error may be determined as the filter coefficients determined for each of the sub-pel positions relative to the full pixel.

Still further, the decoding of a coded prediction error may include decoding a difference and a target filter coefficient from the coded stream, the difference being between filter coefficients of adaptive interpolation filters of at least two sub pixels that have a symmetry relation with respect to at least one predetermined axis, the target filter coefficient being of an adaptive interpolation filter of one of the at least two sub pixels, the coded stream having the difference and the target filter coefficient which are coded, and the determining of a plurality of filter coefficients may include determining a filter coefficient of an adaptive interpolation filter of another sub pixel of the at least two sub pixels that have the symmetry relation with respect to the at least one predetermined axis, by adding the difference and the target filter coefficient together which are decoded in the decoding of a difference and a target filter coefficient.

Still further, the decoding of a coded prediction error may include decoding a difference and a target filter coefficient from the coded stream, the difference being between filter coefficients of adaptive interpolation filters of at least two sub pixels that have a symmetry relation with translation, the target filter coefficient being of an adaptive interpolation filter of one of the at least two sub pixels, the coded stream having the difference and the target filter coefficient which are coded, and the determining of a plurality of filter coefficients may include determining a filter coefficient of an adaptive interpolation filter of another sub pixel of the at least two sub pixels that have the symmetry relation with translation, by adding the difference and the target filter coefficient together which are decoded in the decoding of a difference and a target filter coefficient.

Still further, the decoding of a coded prediction error may include decoding a difference and a target filter coefficient from the coded stream when the filter type of the adaptive interpolation filter is symmetry, the difference being between at least two filter coefficients that have a symmetry relation among the plurality of filter coefficients, the target filter coefficient being one of the at least two filter coefficients, the coded stream having the difference and the target filter coefficient which are coded, and the determining of a plurality of filter coefficients may include determining another filter coefficient of the at least two filter coefficients that have the symmetry relation, by adding the difference and the target filter coefficient together which are decoded in the decoding of a difference and a target filter coefficient.

By the above method, it is possible to correctly decode and determine the filter coefficients of the interpolation filter, from the coded stream that has been coded exploiting symmetries in order to reduce a coding amount.

Still further, the decoding of a coded prediction error may include decoding a target filter coefficient of an adaptive interpolation filter of one of sub pixels that have a symmetry relation with respect to at least one predetermined axis and that are coded as sets each having at least two sub pixels, and the determining of a plurality of filter coefficients may include determining a filter coefficient of an adaptive interpolation filter of another sub pixel of the sub pixels that have the symmetry relation with respect to the at least one predetermined axis, according to the target filter coefficient decoded in the decoding of a target filter coefficient.

Still further, the decoding of a coded prediction error may include decoding one filter coefficient of at least two filter coefficients that have a symmetry relation among the filter coefficients, when the filter type of the adaptive interpolation filter is symmetry, the filter coefficients being coded as sets each having at least two filter coefficients, and the determining of a plurality of filter coefficients may include determining another filter coefficient of the at least two filter coefficients that have the symmetry relation, according to the one filter coefficient decoded in the decoding of one filter coefficient.

Still further, the determining of a plurality of filter coefficients may further include: holding the filter property and the filter coefficients to a memory; and updating the filter property and the filter coefficients in the memory to a new filter property that is newly set in the setting and new filter coefficients that are newly determined in the determining, when the new filter property and the new filter coefficients are decoded in the decoding of a coded prediction error.

By the above method, the same filter coefficient can be used plural times. Thereby, it is possible to reduce a processing amount related to determination of filter coefficients. In addition, since it is not necessary to include overlapping filter coefficients to be used plural times, into the coded stream, a coding amount can be reduced.

Still further, the decoding of a coded prediction error may include decoding information indicating a size of the adaptive interpolation filter, and in the determining of a plurality of filter coefficients, the filter coefficients may be determined for each of the sub-pel positions relative to the full pixel, according to the size of the adaptive interpolation filter.

Still further, in the determining of a plurality of filter coefficients, the filter property for the adaptive interpolation filter may be set on a slice-by-slice basis.

Still further, in the setting, only one filter property may be set for all adaptive interpolation filters of video data included in the coded stream.

It should be noted that the present invention can be implemented not only as the video coding method and the video decoding method, but also as a video encoder and a video decoder which include processing units performing the steps of the video coding method and the video decoding method, respectively.

The present invention can be implemented also as a program causing a computer to execute the steps of the video coding method and the video decoding method. Moreover, the present invention can be implemented as: a computer-readable recording medium, such as a Compact Disc-Read Only Memory (CR-ROM), on which the above program is recorded: information, data, or signals indicating the program; and the like. The program, information, data, and signals can be distributed by a communication network such as the Internet.

It should also be noted that a part or all of the units in each of the video encoder and the video decoder may be integrated into a single system Large Scale Integration (LSI). The system LSI is a multi-functional LSI in which a plurality of the units are integrated into a single chip. An example of the system LSI is a computer system including a microprocessor, a ROM, a Random Access Memory (RAM), and the like.

## Effects of the Invention

The video coding method, the video decoding method, the device using the video coding method, and the device using the video decoding method according to the present invention can optimize prediction efficiency and coding efficiency.

## Brief Description of Drawings

[FIG. 1] FIG. 1 is a block diagram illustrating an example of a structure of a conventional video encoder.
[FIG. 2] FIG. 2 is a block diagram illustrating an example of a structure of a conventional video decoder.
[FIG. 3] FIG. 3 is a block diagram illustrating a structure of a video encoder applying motion compensation with adaptive filtering according to an embodiment of the present invention.
[FIG. 4] FIG. 4 is a block diagram illustrating a structure of a video decoder applying motion compensation with adaptive filtering according to the embodiment of the present invention.
[FIG. 5] FIG. 5 is a flowchart of processing performed by the video encoder according to the embodiment of the present invention.
[FIG. 6A] FIG. 6A is a flowchart of processing performed by the video decoder according to the embodiment of the present invention.
[FIG. 6B] FIG. 6B is a flowchart performed by the video decoder for decoding and determining an interpolation filter exploiting symmetries.
[FIG. 7] FIG. 7 is a diagram illustrating sub-pel positions used for determining filter coefficients.
[FIG. 8] FIG. 8 is a diagram illustrating an example of filter coefficients determined for sub-pel positions.
[FIG. 9] FIG. 9 is a diagram illustrating an example of filter coefficients determined for sub-pel positions.

[FIG. 10] FIG. 10 is a schematic diagram of blocks in an image included in video data.

[FIG. 11] FIG. 11 is a graph plotting an example of an interpolation filter having symmetric filter coefficients.

[FIG. 12] FIG. 12 is a graph plotting an example of interpolation filters having a symmetry relation between two sub-pel positions.

[FIG. 13A] FIG. 13A is a diagram illustrating a symmetry relation between sub-pel positions in the case of applying an adaptive interpolation filter that is symmetric with respect to a vertical axis.

[FIG. 13B] FIG. 13B is a diagram illustrating a symmetry relation between sub-pel positions in the case of applying an adaptive interpolation filter which is symmetric with respect to a horizontal axis.

[FIG. 13C] FIG. 13C is a diagram illustrating a symmetry relation between sub-pel positions in the case of applying an adaptive interpolation filter that is symmetric with respect to a diagonal axis.

[FIG. 13D] FIG. 13D is a diagram illustrating a symmetry relation between sub-pel positions in the case of applying adaptive interpolation filters that are symmetric with respect to vertical and horizontal axes.

[FIG. 13E] FIG. 13E is a diagram illustrating a symmetry relation between sub-pel positions in the case of applying an adaptive interpolation filter that is symmetric with respect to vertical, horizontal, and diagonal axes.

[FIG. 13F] FIG. 13F is a diagram illustrating a symmetry relation between sub-pel positions in the case of applying only a part of the symmetry relation.

[FIG. 14A] FIG. 14A is a diagram illustrating an example of sub-pel positions in the case of applying a horizontal interpolation filter in a separable adaptive interpolation filter.

[FIG. 14B] FIG. 14B is a diagram illustrating an example of sub-pel positions in the case of applying a vertical interpolation filter in a separable adaptive interpolation filter.

[FIG. 14C] FIG. 14C is a diagram illustrating an example of a symmetry relation between sub-pel positions in the case of applying a separable adaptive interpolation filter.

[FIG. 14D] FIG. 14D is a diagram illustrating an example of another symmetry relation between sub-pel positions in the case of applying a separable adaptive interpolation filter.

[FIG. 14E] FIG. 14E is a diagram illustrating an example of a translation relation between sub-pel positions in the case of applying a separable adaptive interpolation filter.

[FIG. 14F] FIG. 14F is a diagram illustrating an example of a symmetry relation and a translation relation of a separable adaptive interpolation filter.

[FIG. 14G] FIG. 14G is a diagram illustrating an example of a symmetry relation and a translation relation between sub-pel positions in the case of applying a separable adaptive interpolation filter.

[FIG. 15] FIG. 15 is a table indicating syntax elements for executing signaling according to the embodiment of the present invention.

[FIG. 16A] FIG. 16A is a diagram illustrating an example of symmetry between sub-pel positions.

[FIG. 16B] FIG. 16B is a diagram illustrating an example of interpolation filters at sub-pel positions to which filter IDs are allocated.

[FIG. 16C] FIG. 16C is a diagram illustrating an example of a symmetry mask indicating whether or not symmetries can be exploited, for each interpolation filter of a sub-pel position.

[FIG. 17] FIG. 17 is a table indicating an excerpt of second syntax elements for executing signaling according to the embodiment of the present invention.

[FIG. 18] FIG. 18 is a table indicating an excerpt of third syntax elements for executing the signaling according to the embodiment of the present invention.

[FIG. 19] FIG. 19 is a table indicating an excerpt of fourth syntax elements for executing the signaling according to the embodiment of the present invention.

[FIG. 20] FIG. 20 is a table indicating an excerpt of fifth syntax elements for executing the signaling according to the embodiment of the present invention.

**Numerical References**

| | |
|---|---|
| 100, 300 | video encoder |
| 110 | subtractor |
| 120 | transformation/quantization unit |
| 130, 230 | inverse quantization/inverse transformation unit |
| 135, 235 | adder |
| 137, 237 | deblocking filter |
| 140, 161, 240, 261 | memory |
| 150, 250 | intra-picture prediction unit |

| 160, 260, 360, 460 | motion compensation prediction unit |
|---|---|
| 170 | motion estimation unit |
| 180, 280 | Intra/Inter switch |
| 190, 390 | entropy coding unit |
| 200, 400 | video decoder |
| 291, 491 | entropy decoder |
| 501, 502, 503 | displacement vector |

**Best Mode for Carrying Out the Invention**

The following describes a video encoder and a video decoder according to a preferred embodiment of the present invention with reference to the drawings.

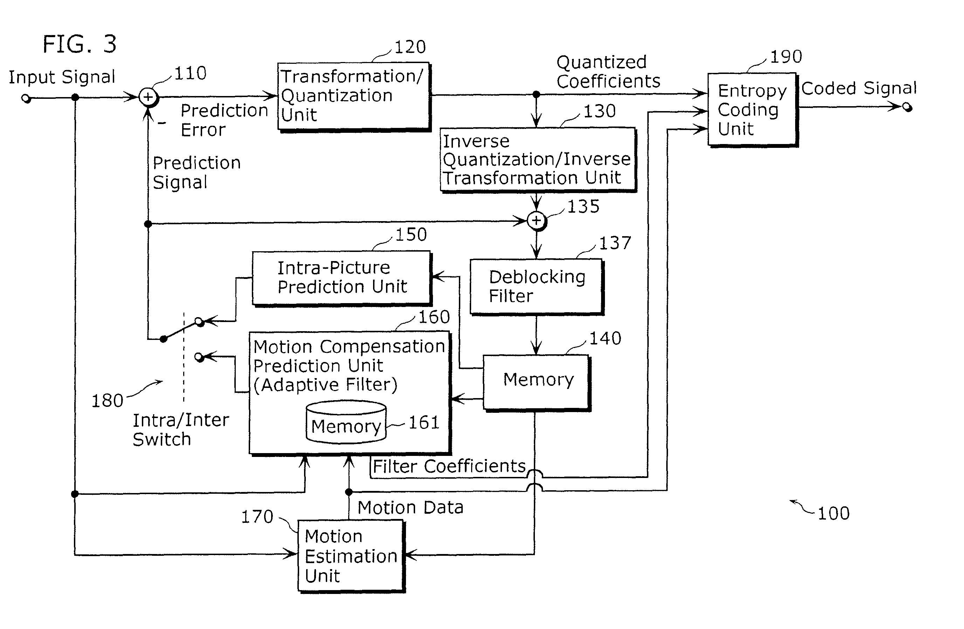

FIG. 3 is a block diagram illustrating a structure of a video encoder 100 applying motion compensation with adaptive filtering according to the embodiment of the present invention. The video encoder 100 in FIG. 3 is a device coding image data by performing motion compensation with sub-pel resolution by using an adaptive interpolation filter for calculating a pixel value of a sub pixel (fractional pixel or decimal pixel) for interpolation between full pixels (integer pixels) configuring an input image included in video data (input video sequence). The block diagram of FIG. 3 is similar to that of FIG. 1, wherein the same reference numerals in the video encoder 300 in FIG. 1 are assigned to the identical units of FIG. 3.

The video encoder 100 in FIG. 3 includes a subtractor 110, a transformation/quantization unit 120, an inverse quantization/inverse transformation unit 130, an adder 135, a deblocking filter 137, a memory 140, an intra-picture prediction unit 150, a motion compensation prediction unit 160, a motion estimation unit 170, an Intra/Inter switch 180, and an entropy coding unit 190. The video encoder 100 differs from the conventional video encoder 300 illustrated in FIG.1 in that the motion compensation prediction unit 360 is replaced by the motion compensation prediction unit 160 and the entropy coding unit 390 is replaced by the entropy coding unit 190.

Here, the video encoder 100 according to the embodiment of the present invention applies H.264/AVC standard or a standard following H.264/AVC standard. In H.264/AVC standard, an input image included in an input video sequence is divided into blocks such as macroblocks. Then, Differential Pulse Code Modulation (DPCM) is employed to transmit only a difference between (a) a block in the input image and (b) a prediction block which is predicted from previously coded blocks.

The subtractor 110 calculates a difference between input signal (input image) and prediction signal (prediction image). The difference is referred to as a prediction error. More specifically, the subtractor 110 calculates a prediction error by subtracting a prediction block generated by the intra-picture prediction unit 150 or the motion compensation prediction unit 160, from a block (current block to be coded) in the input image included in the input signals.

The transformation/quantization unit 120 transforms the prediction error calculated by the subtractor 110, from the spatial domain to the frequency domain. For example, on the prediction error, the transformation/quantization unit 120 performs orthogonal transformation such as a two-dimensional Discrete Cosine Transformation (DCT) or an integer version thereof. Then, the transformation/quantization unit 120 quantizes the resulting transform coefficients. The two-dimensional transform coefficients generated by the quantization have to be converted into one-dimensional ones. Therefore, two-dimensional array of the transform coefficients is scanned in a predetermined sequence, thereby generating a one-dimensional sequence of quantized transform coefficients to pass it to the entropy coding unit 190. The quantization can reduce the amount of data that has to be coded.

Here, the transformation/quantization unit 120 quantizes the transform coefficients using a step of quantization. The step of quantization is controlled by quantization tables that specify the precision and therewith the number of bits that are used to code each frequency coefficient. Lower frequency components are usually more important for image quality than fine details so that more bits are spent for coding the low frequency components than for the higher ones.

The inverse quantization/inverse transformation unit 130 inversely quantizes the coefficients quantized by the transformation/quantization unit 120. In addition, the inverse quantization/inverse transformation unit 130 applies an inverse transformation to the inversely-quantized coefficients. Thereby, the prediction error, which has been converted to the frequency domain and quantized, is recovered to be a prediction error that is converted to the spatial domain.

In the adder 135, the prediction error recovered by the inverse quantization/inverse transformation unit 130 is added to the prediction signal (prediction block) generated by the intra-picture prediction unit 150 or the motion compensation prediction unit 160, in order to form the locally decoded image.

The deblocking filter 137 performs deblocking filtering on the locally decoded image generated by the adder 135. Thereby, the deblocking filter 137 can reduce blocking artifacts in the locally decoded image. It should be noted that the deblocking filter 137 may not be applied to the locally decoded image.

The memory 140 is a frame memory in which locally decoded images applied with deblocking filtering of the deblocking filter 137 are stored.

The intra-picture prediction unit 150 generates a prediction block, by reading a locally decoded image from the memory 140, and performing prediction in "Intra" mode based on the obtained locally decoded image. In "Intra" mode, prediction using already coded blocks of the same image is performed in order to generate a prediction block. In other words, in "Inter" mode, it is possible to code a current block with reference only to the same picture, not to previously decoded pictures.

The Intra-coded images (I-type images) coded in the above manner provide error resilience for the coded video sequence. Further, entry points into bitstreams of coded data are provided by the I-type images in order to enable a random access, namely, to access I-type images within the sequence of coded video images.

The motion compensation prediction unit 160 determines filter properties (a filter property or a kind of filter properties) for an adaptive interpolation filter required for motion compensation with sub-pel resolution. The filter properties are, for example, information indicating a filter type of the adaptive interpolation filter, and information indicating a size of the adaptive interpolation filter. A size of a filter is, for example, the number of taps which is the number of filter coefficients of the adaptive interpolation filter.

More specifically, the motion compensation prediction unit 160 determines, as an adaptive interpolation filter, one of a separable adaptive filter and a non-separable adaptive filter, and further determines the number of taps and a value of each filter coefficient regarding the determined adaptive interpolation filter. A value of a filter coefficient is determined for each sub-pel position relative to a full-pel position. The determination of filter coefficients is described in more detail below. Here, the motion compensation prediction unit 160 may employ a non-adaptive interpolation filter having fixed filter coefficients.

Further, the motion compensation prediction unit 160 determines whether or not the determined adaptive interpolation filter has a symmetry relation, in other words, determines whether the determined filter is a symmetry filter or an asymmetry filter. The processing exploiting symmetry within a filter is described in detail below.

Here, the motion compensation prediction unit 160 sets filter properties (a kind of filter properties, or a filter property) for an interpolation filter on a predetermined process unit basis, for example, on a sub pixel-by-sub pixel basis, on a macroblock-by-macroblock basis, on a slice-by-slice basis, on a picture-by-picture basis, or on a sequence-by-sequence basis. Here, it is possible to set one kind of filter properties for one video data. Therefore, since the same kind of filter properties is employed in predetermined same units of processing, the motion compensation prediction unit 160 has a memory 161 in which the employed kind of filter properties is temporarily stored. The memory 161 holds filter properties, filter coefficients, and the like, as needed. For example, the motion compensation prediction unit 160 determines filter properties on an I picture-by-I picture basis, and determines filter coefficients on a slice-by-slice basis.

The motion compensation prediction unit 160 sets filter properties for an adaptive interpolation filter, based on video data, content of an image included in the video data, or an image resolution of the video data. Or, the motion compensation prediction unit 160 sets filter properties for an adaptive interpolation filter, so as to minimize a size of the image data coded on a predetermined process unit basis. More specifically, the motion compensation prediction unit 160 performs coding on a predetermined process unit basis for each kind of filter properties, and thereby selects a kind of filter properties which can minimize a size of resulting coded image data.

Therefore, a copy of input signal is also provided to the motion compensation prediction unit 160. Furthermore, the filter coefficients of the determined adaptive interpolation filter are transmitted to the entropy coding unit 190 which inserts the obtained filter coefficients into an output bitstream.

Furthermore, the motion compensation prediction unit 160 reads a locally decoded image from the memory 140, and applies filter processing on the obtained locally decoded image using the determined adaptive interpolation filters, thereby generating a reference image with sub-pel resolution. Then, based on the generated reference image and motion vectors determined by the motion estimation unit 170, the motion compensation prediction unit 160 performs motion compensation with sub-pel resolution to generate a prediction block.

The motion estimation unit 170 reads a locally decoded image from the memory 140, and performs motion estimation using the obtained locally decoded image and an input image included in input signals, thereby determining a motion vector. The motion vector is a two-dimensional vector indicating pixel displacement between a current block and a block included in the locally decoded image. Here, motion data indicating the determined motion vector is transmitted to the entropy coding unit 190 which inserts the obtained motion data into an output bitstream.

Here, the motion estimation unit 170 determines the motion vector at sub-pel resolution, such as half-pel or quarter-pel resolution, in order to optimize prediction accuracy. Therefore, preparing for the case where a motion vector indicates a sub-pel position, the motion compensation prediction unit 160 applies interpolation filters on the locally decoded image to calculate pixel values at sub-pel positions from pixel values at full-pel positions.

The Intra/Inter switch 180 switches (a) prediction signal indicating a prediction block generated by the intra-picture prediction unit 150 or (b) prediction signal indicating a prediction block generated by the motion compensation prediction unit 160, in order to be provided to the subtractor 110 and the adder 135. In other words, the Intra/Inter switch 180 selects (a) processing that is performed by the intra-picture prediction unit 150 or (b) processing that is performed by the motion compensation prediction unit 160, namely, determines whether a current block is to be coded in "Intra" mode or in "Inter" mode.

The entropy coding unit 190 codes (a) the quantized coefficients quantized by the transformation/quantization unit 120, (b) the filter coefficients determined by the motion compensation prediction unit 160, and (c) the motion data generated by the motion estimation unit 170, thereby generating coded signals to be outputted as an output bitstream. More specifically, the entropy coding unit 190 compresses a one-dimensional sequence of quantized coefficients to a series of number pairs called run levels. Then, the run-level sequence is coded with binary code words of variable length (Variable Length Code, VLC). The code is optimized to assign shorter code words to most frequent run-level pairs occurring in typical video images. The resulting bitstream is multiplexed with the coded motion data and the coded filter coefficients, and then, as an output bitstream, stored on a recording medium or transmitted to an external video decoder or the like.

It should be noted that the entropy coding unit 190 may code a plurality of filter coefficients except redundancies, exploiting symmetry between filter coefficients. For example, it is possible to code differences between filter coefficients of different adaptive interpolation filters regarding at least two sub-pel positions which are symmetry with respect to at least one predetermined axis. It is also possible to code differences between filter coefficients of different adaptive interpolation filters, regarding two sub-pel positions having a symmetry relation with translation. The processing for coding such differences is described in detail further below.

In the conventional technologies, employed filter coefficients are fixed (invariable), or although filter coefficients are adaptive, an interpolation filter itself is fixed. However, the video encoder 100 according to the embodiment of the present invention having the above structure adaptively determines filter properties and filter coefficients of an interpolation filter used in performing motion compensation with sub-pel resolution. Then, the video encoder 100 codes the determined filter properties and filter coefficients, and transmits the resulting as an output bitstream to an external video decoder.

Next, the following describes a video decoder according to the embodiment of the present invention which decodes the output bitstream (hereinafter, referred to also as a "coded bitstream") generated by coding of the video encoder 100 in the above-described manner.

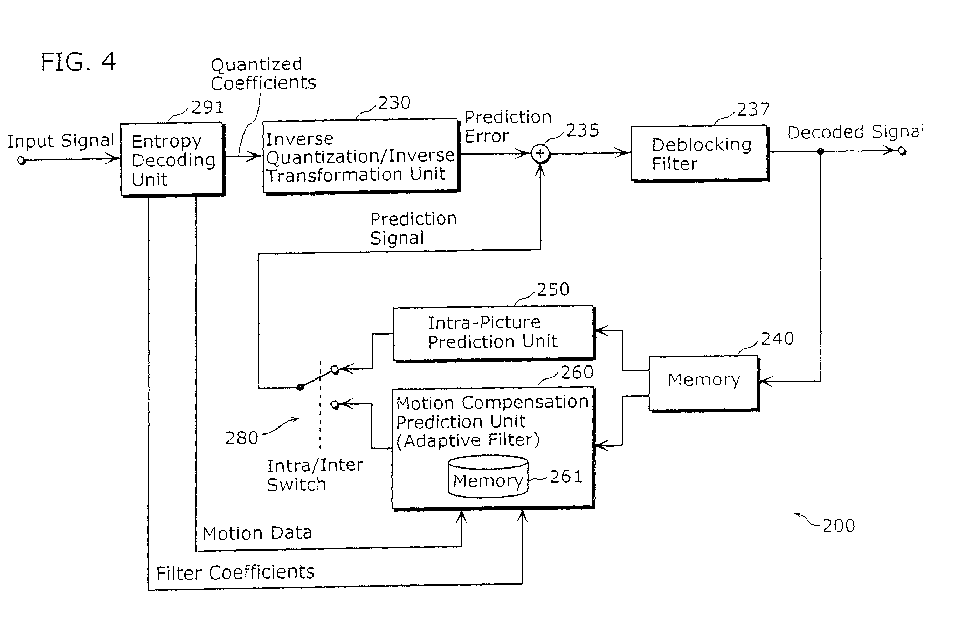

FIG. 4 is a block diagram illustrating a structure of the video decoder 200 applying motion compensation with adaptive filtering according to the embodiment of the present invention. The block diagram of FIG. 4 is similar to that of FIG. 2, wherein the same reference numerals in the video decoder 400 in FIG. 2 are assigned to the identical units of FIG. 4.

The video decoder 200 illustrated in FIG. 4 is an entropy decoding unit 291, the inverse quantization/inverse transformation unit 230, the adder 235, the deblocking filter 237, the memory 240, the intra-picture prediction unit 250, a motion compensation prediction unit 260, and the Intra/Inter switch 280.

The entropy decoding unit 291 decodes input signal, such as a coded bitstream transmitted from the video encoder 100, thereby dividing the input signal into a sequence of motion data, a sequence of filter coefficients, and a sequence of quantized coefficients. Then, the entropy decoding unit 291 provides the decoded motion data and filter coefficients to the motion compensation prediction unit 260. In addition, the entropy decoding unit 291 converts a one-dimension sequence of quantized coefficients to a two-dimensional array of quantized coefficients which is required in inverse transformation. The resulting two-dimensional array of quantized coefficients is provided to the inverse quantization/inverse transformation unit 230.

The inverse quantization/inverse transformation unit 230 inversely quantizes the quantized coefficients decoded by the entropy decoding unit 291. In addition, the inverse quantization/inverse transformation unit 230 applies inverse transformation to the inversely-quantized coefficients. Thereby, the prediction error, which has been converted to the frequency domain and quantized, is recovered to be a prediction error that is converted to the spatial domain. Here, the inverse quantization/inverse transformation unit 230 performs the same processing as that of the inverse quantization/inverse transformation unit 130 illustrated in FIG. 3.

In the adder 235, the prediction error recovered by the inverse quantization/inverse transformation unit 230 is added to the prediction signal (prediction block) generated by the intra-picture prediction unit 250 or the motion compensation prediction unit 260, in order to form a decoded image. Here, the adder 235 performs the same processing as that of the adder 135 illustrated in FIG. 3.

The deblocking filter 237 performs deblocking filtering on the decoded image generated by the adder 235. Thereby, the deblocking filter 237 can reduce blocking artifacts in the decoded image. It should be noted that the deblocking filter 237 may not be applied to the decoded image. Here, the deblocking filter 237 performs the same processing as that of the deblocking filter 137 illustrated in FIG. 3.

The memory 240 is a frame memory in which the locally decoded images applied with deblocking filtering of the deblocking filter 237 are stored.

The intra-picture prediction unit 250 generates a prediction block, by reading a decoded image from the memory 240, and performing prediction in "Intra" mode based on the obtained decoded image. Likewise the intra-picture prediction unit 150, the intra-picture prediction unit 250 can decode a current block to be decoded with reference only to the same picture, not to previously decoded pictures.

The motion compensation prediction unit 260 generates a reference image, by reading a decoded image from the memory 240, and applying adaptive interpolation filters, which are required for motion compensation with sub-pel resolution, on the obtained decoded image. Here, in order to determine what kind of adaptive interpolation filters are to be applied, the motion compensation prediction unit 260 receives decoded filter coefficients from the entropy decoding unit 291. Based on the generated reference image and the motion data received from the entropy decoding unit 291, the motion compensation prediction unit 260 generates a prediction block. Here, the motion compensation prediction unit 260 applies adaptive interpolation filters on the decoded image because sub-pel resolution rather than full-pel resolution is required depending on values of motion vectors indicated in the received motion data.

Here, since the same kind of filter properties is employed on a predetermined process unit basis (for example, on a slice-by-slice basis), the motion compensation prediction unit 260 has a memory 261 in which the employed kind of filter properties is temporarily stored. The memory 261 holds filter properties, filter coefficients, and the like, as needed.

For example, when filter properties are transmitted from the video encoder 100 on an I picture-by-I picture basis, filter coefficients are also transmitted on an I picture-by-I picture basis or on a slice-by-slice basis. The memory 261 holds the received filter properties and filter coefficients until next filter properties or filter coefficients are received. When new filter properties or filter coefficients are received, the motion compensation prediction unit 260 updates the filter properties or the filter coefficients stored in the memory 261 to them.

Here, when filter properties are transmitted, filter coefficients are also transmitted together with the filter properties if the filter is not a predetermined non-adaptive filter. Therefore, transmission of filter properties means updating of filter coefficients. It should be noted that the memory 261 may store plural kinds of filter properties and plural kinds of filter coefficients. In other words, the memory 261 may store not only latest filter properties but also past filter properties. Thereby, when an interpolation filter having the same filter properties as the past filter properties is used, the video encoder 100 does not need to re-transmit the same filter properties.

The Intra/Inter switch 280 switches (a) prediction signal indicating a prediction block generated by the intra-picture prediction unit 250 or (b) prediction signal indicating a prediction block generated by the motion compensation prediction unit 260, in order to be provided to the adder 235.

With the above structure, the video decoder 200 according to the embodiment of the present invention retrieves, from an input coded bitstream, information indicating filter properties and filter coefficients regarding each interpolation filter for motion compensation with sub-pel resolution. Then, based on the retrieved information, the video decoder 200 performs motion compensation with sub-pel resolution. As a result, it is possible to correctly reconstruct an image data from the coded data coded by the video encoder 100 using the adaptively-determined interpolation filters.

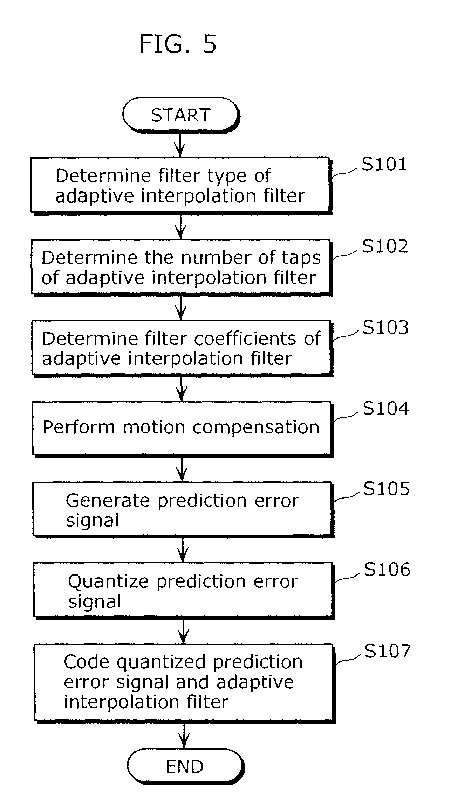

Next, the following describes a video coding method performed by the video encoder 100 according to the embodiment of the present invention. FIG. 5 is a flowchart of processing performed by the video encoder 100 according to the embodiment of the present invention.

First, the motion compensation prediction unit 160 determines a filter type of an adaptive interpolation filter (S101). More specifically, on a slice-by-slice basis, it is determined based on input video data whether the adaptive interpolation filter is separable or non-separable, symmetry or asymmetry, and the like.

Then, depending on the determined filter type, the motion compensation prediction unit 160 determines the number of taps of the adaptive interpolation filter for each sub-pel position (S102). More specifically, the motion compensation prediction unit 160 determines the number of filter coefficients to be employed. For example, if the interpolation filter is determined as non-separable with 6 x 6 taps and asymmetry, the number of filter coefficients is determined to be 36. On the other hand, if the target interpolation filter is determined as non-separable with 6 x 6 taps and symmetry, the number of filter coefficients is determined to be less than 36.

Furthermore, if a target sub-pel position has a symmetric relation to a sub-pel position, for which filter coefficients of the interpolation filter have already been determined, with respect to a predetermined axis, the motion compensation prediction unit 160 may determine the number of filter coefficients of the target sub-pel position to be 0. In other words, the already-determined interpolation filter is mirrored to be an interpolation filter for the target sub-pel position.

Next, for each sub-pel position, the motion compensation prediction unit 160 determines filter coefficients corresponding to the determined number of taps of the interpolation filter (S103).

Then, the motion compensation prediction unit 160 calculates pixel values at the respective sub-pel positions using respective interpolation filters having the respectively-determined filter coefficients in order to generate a reference image with sub-pel resolution, and then performs motion compensation with reference to the generated reference image in order to generate prediction signal (S104).

The subtractor 110 subtracts, from input signal, the prediction signal generated by the motion compensation, thereby generating prediction error signal (S105). The transformation/quantization unit 120 performs frequency transformation and quantization on the generated prediction error signal to generate quantized coefficients (S106).

The entropy coding unit 190 codes (a) the quantized coefficients generated by the transformation/quantization unit 120, (b) the filter properties and filter coefficients determined by the motion compensation prediction unit 160, and (c) the motion data indicating a motion vector detected by the motion estimator unit 170 (S107). The entropy coding unit 190 transmits the resulting coded signal (coded bitstream) to an external video decoder or the like.

As described above, the video encoder 100 according to the embodiment of the present invention adaptively determines filter properties and filter coefficients for interpolation filters, and then performs motion compensation with sub-pel resolution using the determined interpolation filters. Thereby, filter properties and filter coefficients of interpolation filters can be determined with considerable flexibility, which optimizes prediction accuracy and coding efficiency.

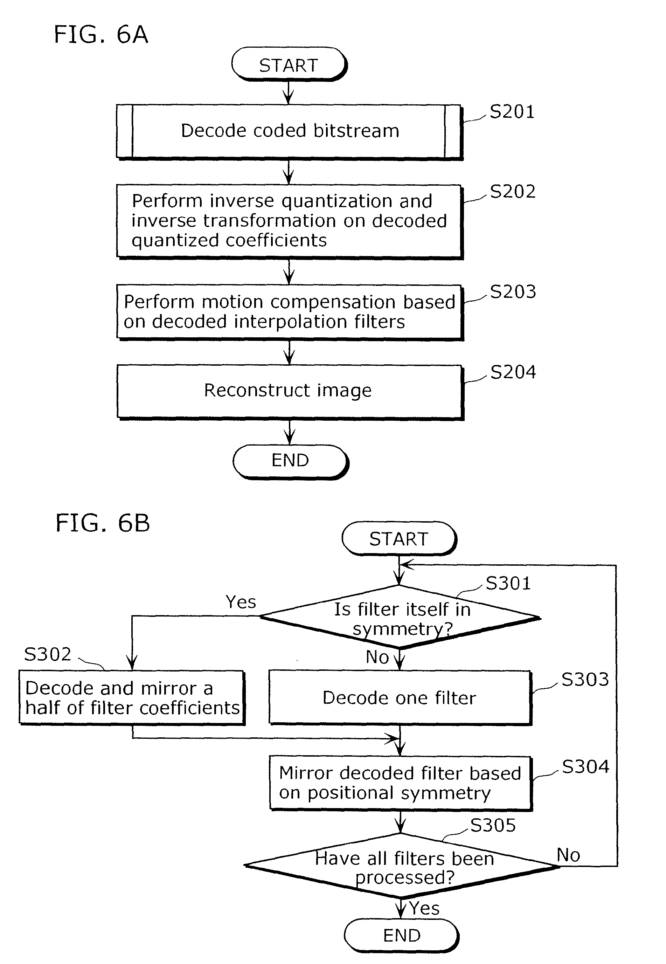

Next, the following describes a video decoding method performed by the video decoder 200 according to the embodiment of the present invention. FIG. 6A is a flowchart of processing performed by the video decoder 200 according to the embodiment of the present invention.

First, the entropy decoding unit 291 decodes an input coded bitstream (S201). The resulting quantized coefficients are provided to the inverse quantization/inverse transformation unit 230, and the motion data and the interpolation filters are provided to the motion compensation prediction unit 260.

Next, the inverse quantization/inverse transformation unit 230 performs inverse quantization and inverse transformation on the resulting quantized coefficients to generate a prediction error (S202). Based on the interpolation filters and motion data resulting from the decoding, the motion compensation prediction unit 260 performs motion compensation with reference to pixel values at sub-pel positions using a reference image with sub-pel resolution (S203). The prediction error generation (S202) and the motion compensation (S203) can be performed in arbitrary order, or may be performed in parallel at the same time.

The adder 235 adds the prediction error generated by the inverse quantization/inverse transformation unit 230 with the prediction signal generated by the motion compensation prediction unit 260 to reconstruct an image from the coded image (S204). Here, the reconstructed image may be applied with deblocking filtering by the deblocking filter 237.

FIG. 6B is a flowchart of the case where an interpolation filter is decoded and determined by exploiting symmetries. An interpolation filters is determined for each sub-pel position.

First, the motion compensation prediction unit 260 determines whether or not a target interpolation filter itself to be determined is symmetry (S301). If the interpolation filter itself is symmetry (Yes at S301), then only a half of filter coefficients of the interpolation filter are decoded and the decoded filter coefficients are mirrored to generate the other half of the filter coefficients (S302). On the other hand, if the interpolation filter itself is not symmetry (No at S301), then all filter coefficients included in the interpolation filter are decoded (S303).

Next, the motion compensation prediction unit 260 determines an interpolation filter at a sub-pel position that has a symmetric relation to a sub-pel position of the decoded and determined interpolation filter (S304). More specifically, the motion compensation prediction unit 260 mirrors the decoded and determined interpolation filter to determine an interpolation filter at a sub-pel position that has a symmetric relation to the sub-pel position of the decoded and determined interpolation filter. Here, if an interpolation filter in a horizontal direction is also used as an interpolation filter in a vertical direction, the interpolation filter is rotated to be an interpolation filter for a target sub-pel position.

Finally, the motion compensation prediction unit 260 determines whether or not interpolation filters have been decoded and determined for all sub-pel positions (S305). If interpolation filters are not determined for all sub-pel positions (No at S305), then the motion compensation prediction unit 260 repeats the above steps (S301 to S305) to decode and determine interpolation filters at sub-pel positions which have not yet been determined. On the other hand, if interpolation filters are determined for all sub-pel positions (Yes at S305), then the processing for determining interpolation filters is completed, and processing for generating a prediction error (S202) is performed.

Here, the information indicating which sub-pel positions have symmetric relation is included in a coded bitstream as described later.

As described above, the video decoder 200 according to the embodiment of the present invention retrieves information of interpolation filters from a coded bitstream, and based on the retrieved information, performs motion compensation using determined filter properties and filter coefficients of each of the interpolation filters. Thereby, the video decoder 200 can obtain the information of interpolation filters which are flexibly determined by the video encoder side, so that the video decoder 200 can correctly decode a coded image.

(DETERMINING FILTER COEFFICIENTS)

In the following, a method for determining filter coefficients of adaptive interpolation filters, which is performed by the motion compensation prediction unit 160, is described.

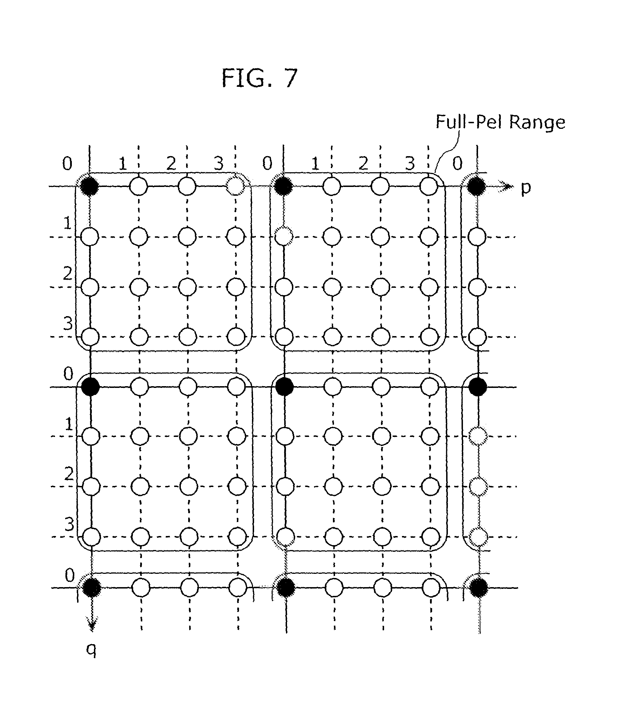

FIG. 7 is a diagram illustrating sub-pel positions used for determining filter coefficients. In FIG. 7, filled circles denote full-pel positions, whereas open circles indicate sub-pel positions. The following description is given in the case of quarter-pel resolution.

Each of a full-pel position and sub-pel positions is indicated as a position (p, q) for each full-pel range. The full-pel range is a predetermined range including a single full pixel. In the example of FIG. 7, the full-pel range is a range including 4 x 4 sub pixels with sub-pel resolution. Here, p=0, 1, 2, 3, and q=0, 1, 2, 3. A position (p, q) is expressed as local coordinates representing a position in a full-pel region. More specifically, a position (p, q) represents common coordinates in each full-pel range in an image. Here, in the example illustrated in FIG. 7, one full-pel range includes a full pixel at a position (0, 0), and fifteen sub pixels at sub-pel positions (0, 1), (0, 2), (0, 3), (1, 0), (1, 1), (1, 2), (1, 3), (2, 0), (2, 1), (2, 2), (2, 3), (3, 0), (3, 1), (3, 2), and (3, 3). As explained above, each of the sub-pel positions indicates a relative position with reference to the full-pel position. In other words, a position (p, q) represents each sub-pel position with reference to a certain full pixel position.

The motion compensation prediction unit 160 determines interpolation filters to calculate sub pixels (shown as open circles) with reference to a full pixel (shown as filled circle). More specifically, the motion compensation prediction unit 160 sets filter properties for an interpolation filter, and based on the determined properties, determines filter coefficients for a target sub-pel position. The filter coefficients are weighting factors used to add full pixels together with weighting. An interpolation filter is indicated as a set of filter coefficients each corresponding to one of full pixels. The motion compensation prediction unit 160 determines an interpolation filter for each sub pixel in a single full-pel range, and uses the determined interpolation filter also as interpolation filters for sub pixels in a different full-pel range. As a result, it is not necessary to determine interpolation filters for all sub-pel positions. However, in order to enhance prediction accuracy, interpolation filters may be determined for all sub-pel positions.

Filter properties for an interpolation filter are, for example, a filter type, a filter size, and the like. A filter type indicates, for example, whether the filter is adaptive or non-adaptive, whether the filter is separable of non-separable, or whether the filter is symmetry or asymmetry. A filter size is, for example, the number of taps which means the number of filter coefficients.

The motion compensation prediction unit 160 sets filter properties for an interpolation filter independently on a predetermined process unit basis. For example, filter properties are set on a sub pixel -by-sub pixel basis, on a macroblock-by-macroblock basis, on a slice-by-slice basis, on a picture-by-picture basis, on a sequence-by-sequence basis, or the like. Here, it is possible to set one kind of filter properties for one video data.

The following describes the case where a filter type is non-separable. As one example of non-separable interpolation filters, a filter with 6 x 6 taps is described.

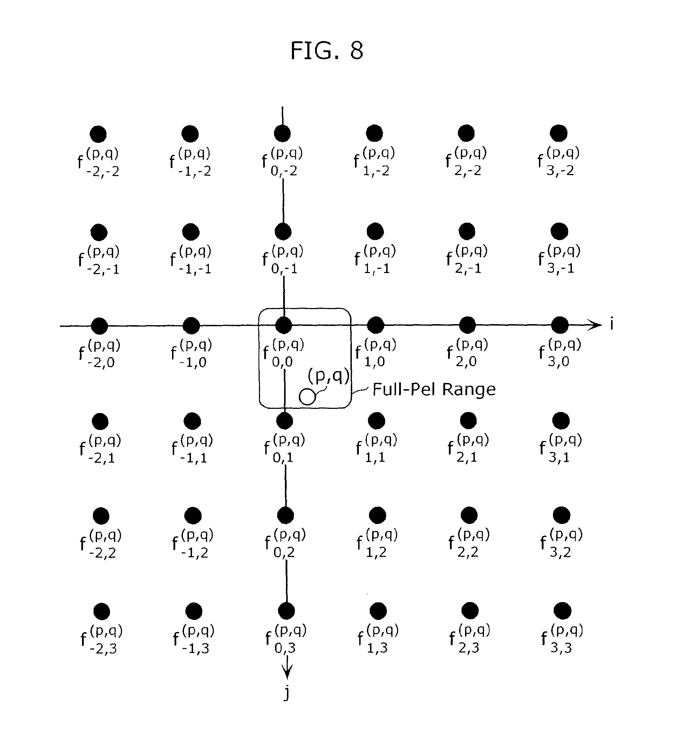

FIG. 8 is a diagram illustrating an example of filter coefficients determined for a sub-pel position. In FIG. 8, filled circles denote full-pel positions, whereas an open circle indicates a sub-pel position. Here, it is assumed that an interpolation filter $f^{(p,q)}$ for calculating a pixel value of a sub pixel at a position (p, q) is to be determined.

The interpolation filter $f^{(p,q)}$ is a set of filter coefficients $f_{i,j}^{(p,q)}$ (i=-2, -1, 0, 1, 2, 3 and j=-2, -1, 0, 1, 2, 3) for weighting pixel values of respective 6 x 6 full pixels having the center that is approximately at a sub-pel position (p, q). In the example illustrated in FIG. 8, $f_{0,0}^{(p,q)}$ (where i=0, and j=0) represents a filter coefficient for weighting a pixel value of a full pixel included in a full-pel range having a target sub pixel. An i-axis is provided in a horizontal direction and a j-axis is provided in a vertical direction. Thereby, a filter coefficient $f_{i,j}^{(p,q)}$ is determined for each full pixel. A calculation method using a filter coefficient formula is described in detail later.

Applying the non-separable adaptive interpolation filter determined in the above manner, the motion compensation prediction unit 160 calculates a sub pixel (open circle in FIG. 8) at a position (p, q). In the same manner, for each of other sub pixels to be interpolated, a filter coefficient is determined and an interpolation filter of the determined filter coefficients is employed to perform motion compensation with sub-pel resolution.

Next, the case of applying a separable filter type is described. Here, as one example, it is assumed that a filter is a separable interpolation filter including a horizontal interpolation filter and a vertical interpolation filter each of which is a 6-tap filter using 6 full pixels.

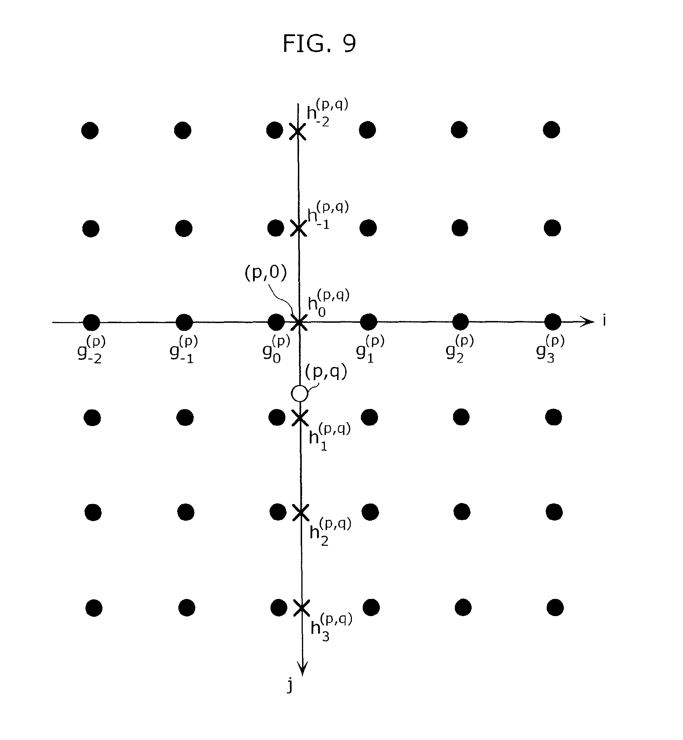

FIG. 9 is a diagram illustrating an example of filter coefficients determined for a sub-pel position. In FIG. 9, filled circles denote full-pel positions, whereas an open circle indicates a sub-pel position. In addition, marks X denote sub-pel positions obtained by horizontal interpolation using full pixels.

First, the motion compensation prediction unit 160 determines a horizontal interpolation filter $g^{(p,q)}$. Here, since the horizontal interpolation filter is not influenced by values in a vertical direction, $g^{(p,q)}=^{(p)}$. Like in FIG. 8, $g_0^{(p)}$ represents a filter coefficient for weighting a pixel value of a full pixel included in a full-pel range including a target sub pixel, and an i-axis is provided in a horizontal direction, thereby determining filter coefficients $g_i^{(p)}$ for full pixels in a horizontal direction.

Applying the horizontal interpolation filter $g^{(p)}$ determined in the above manner, the motion compensation prediction unit 160 calculates sub pixels (marks X in FIG. 9) at positions (p, 0). Here, since the vertical interpolation filter is also a 6-tap filter, 6 sub pixels (shown as marks X) located at positions (p, 0) are calculated.

Next, the motion compensation prediction unit 160 determines a vertical interpolation filter $h^{(p,q)}$. Like the horizontal direction case, $h_0^{(p,q)}$ represents a filter coefficient located at a position (p, 0) in a full-pel range including a target sub pixel, and a j-axis is provided in a vertical direction, thereby determining filter coefficients $h_j^{(p,q)}$ for weighting sub pixels located at position (p, 0) obtained by the horizontal interpolation.

Applying the vertical interpolation filter $h^{(p,q)}$ determined in the above manner, the motion compensation prediction unit 160 calculates a sub pixel (open circle in FIG. 9) at a position (p, q). In the same manner, for each of other sub pixels to be interpolated, a filter coefficient is determined and an interpolation filter of the determined filter coefficient is employed to perform motion compensation with sub-pel resolution.

It should be noted that it has been described in the above example that the horizontal interpolation is performed first and then the vertical interpolation is performed, but it is also possible that the vertical interpolation is performed first and then the horizontal interpolation is performed.

The following describes the method for determining filter coefficients of an adaptive interpolation filter in more detail with reference to figures and equations. First, a case of applying a non-separable adaptive interpolation filter is described.

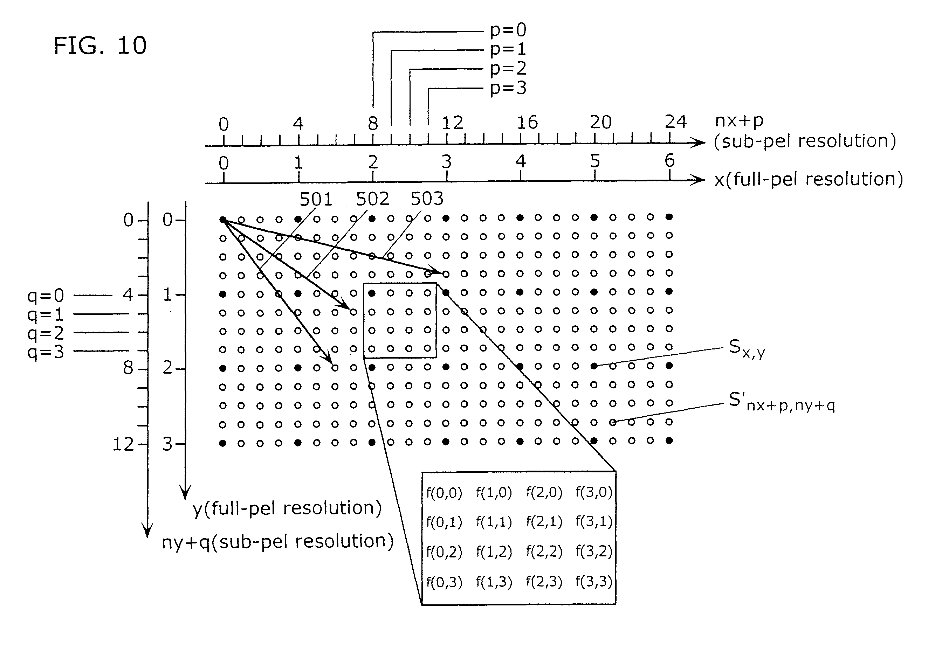

FIG. 10 is a schematic diagram of blocks in an image included in video data. In FIG. 10, filled circles denote full-pel positions, namely, sampling points of the original image, whereas open circles indicate sub-pel positions, at which pixel values have to be interpolated. Although the following figure illustrates quarter-pel resolution, the embodiment of the present invention may be applied to any particular sub-pel resolution, including half-pel, quarter-pel, eighth-pel, and the like, and even different sub-pel resolutions in vertical and horizontal directions.

In the following, n will denote sub-pel resolution, for example, n=2 for half-pel and n=4 for quarter-pel resolution, and the like. Each position on an image included in video data and on a locally decoded image (reference image) stored in the memory 140 is expressed with full-pel resolution or with sub-pel resolution. (x, y) represents coordinates on each image with full-pel resolution, whereas (nx+p, ny+q) represents coordinates on each image with sub-pel resolution. Therefore, full-pel position (nx, ny) expressed with sub-pel resolution matches a position (x, y) expressed with full-pel resolution.

Furthermore, $S_{x,y}$ represents a pixel value at a full-pel position (x, y) in an original image (for example, a block in video data). A pixel value at a sub-pel position (nx+p, ny+q) in a corresponding horizontally and vertically interpolated image is denoted as $S'_{nx+p,ny+q}$. Here, as illustrated in FIG. 10, a sub-pel position is denoted by p=0, ..., n-1 and q=0, ..., n-1.

Here, whereas the position denoted by (nx+p, ny+q) is a certain single point on an image, the position denoted by (p, q) is a relative position based on a single point at local coordinates in a part of image (full-pel range), namely, based on a certain full-pel position. The relative position based on a full-pel position is sub-pel positions with reference to a single full-pel position. More specifically, $S_{x,y}$ shown in FIG. 10 represents a pixel value at a position denoted by (5, 2) with full-pel resolution, and also denoted by (20, 8) (=(4x5, 4x2)) with sub-pel resolution. Likewise, $S'_{nx+p,ny+q}$ represents a pixel value at a position denoted by (21, 11) (=(4x5+1, 4x2+3)) with sub-pel resolution. $S'_{nx+p,ny+q}$ also represents a pixel value at a position denoted by (1, 3) at local coordinates.

The adaptive interpolation filter according to the embodiment of the present invention is defined as a linear operator mapping the original image to the corresponding horizontally and vertically interpolated image, namely is determined by the following Equation 1.

## [Mathematical Formula 1]

$$S'_{nx+p,ny+q} = \sum_{i,j} f^{(p,q)}_{i,j} S_{x-i,y-j} \qquad \text{(Equation 1)}$$

Here, $f_{i,j}^{(p,q)}$ are discrete filter coefficients for the interpolation filter with, for instance, i=-2, -1, 0, 1, 2, 3 and j=-2, -1, 0, 1, 2, 3 for a 6x6-tap filter. The filter coefficients do also depend on the particular sub-pel position (p, q) at the local coordinates. Hence, as illustrated in FIG. 10, a specific interpolation filter $f^{(p,q)}$ is defined for each sub-pel position (p, q).

It is further requested that the interpolation filter should yield the original values at full-pel positions (where p=0 and q=0). Hence, the filter coefficients $f_{i,j}^{(0,0)}$ of the interpolation filter $f^{(0,0)}$ regarding a full-pel position (0, 0) is determined by the following Equation 2.

## [Mathematical Formula 2]

$$f^{(0,0)}_{i,j} = \delta_{i,0} \cdot \delta_{j,0} \qquad \text{(Equation 2)}$$

where $\delta_{k,l}$ is the Kronecker-Delta, for example, $\delta_{k,l}=1$ if $k=l$ and $\delta_{k,l}=0$ if $k\neq l$.

A displacement vector 501, 502, or 503 will be denoted by Vec=$(v_x, v_y)$. The components $v_x$ and $v_y$ refer to sub-pel (fractional-pel) positions. A displacement vector 503 with $v_x$ mod=0 is said to point to a full-pel position in x-direction (or to indicate a full-pel translation in x-direction). A displacement vector 501 or 502 with $v_x$ mod=1, ..., (n-1) is said to point to a sub-pel position in x-direction (or to indicate a sub-pel translation in x-direction). A similar terminology will be used for the y-direction.

The filter coefficients $f_{i,j}^{(p,q)}$ or a given sub-pel position (p, q) are now determined as follows. Let $P_{x,y}$ denote the previously decoded reference image and Vec=$(v_x, v_y)$ a displacement vector at sub-pel resolution that points to sub-pel position (p, q). Here, $p=v_x$ mod n, and $q= v_y$ mod n. The prediction error $e_{p,q}$ for this displacement is thus expressed as the following Equation 3.

### [Mathematical Formula 3 ]

$$\left(e_{p,q}\right)^2 = \sum_{x,y}\left(S_{x,y} - \sum_{i,j} f_{i,j}^{(p,q)} P_{\tilde{x}-i,\tilde{y}-j}\right)^2 \qquad \text{(Equation 3)}$$

where

$$\tilde{x} = x + [[v_x / n]] \quad \text{and} \quad \tilde{y} = y + [[v_y / n]].$$

wherein [[...]] denotes the floor operator that yields the largest integer smaller than the operator's argument (round-down operator). The sum over x and y is to be taken over that region of the original image for which the displacement vector is valid. This region may correspond to the macroblock, for which the displacement vector has been determined. The region may also consist of a (non-connected) union of some or all macroblocks (of one or more video images) with displacement vectors that point to the same sub-pel position, namely, displacement vectors with $v_x$ mod n = p and $v_y$ mod n = q.

The filter coefficients $f_{i,j}^{(p,q)}$ are now determined so as to minimize the prediction error of Equation 3. The optimization may be performed by any numerical optimization algorithm known in the art, such as gradient descent, simulated annealing, and the like. However, in the present case, the optimum filter coefficients may also be determined by solving a system of linear equations, which is expressed by the following Equation 4, that results from computing the partial derivatives of Equation 3 with respect to the filter coefficients $f_{i,j}^{(p,q)}$.

### [Mathematical Formula 4]

$$0 = \frac{\partial}{\partial f_{k,l}^{(p,q)}} \sum_{x,y}\left(S_{x,y} - \sum_{i,j} f_{i,j}^{(p,q)} P_{\tilde{x}-i,\tilde{y}-j}\right)^2 = -2\sum_{x,y} P_{\tilde{x}-k,\tilde{y}-l}\left(S_{x,y} - \sum_{i,j} f_{i,j}^{(p,q)} P_{\tilde{x}-i,\tilde{y}-j}\right)$$

$$\text{(Equation 4)}$$

As described above, in the case of applying a non-separable adaptive interpolation filter, it is possible to determine filter coefficients so that the prediction error can be minimized, in other words, prediction accuracy can be increased.

Next, a case of applying a separable adaptive interpolation filter is described.

If the two-dimensional interpolation filter $f^{(p,q)}$ is separable, it may be rewritten as a composition of two separate one-dimensional filters $g^{(p,q)}$ and $h^{(p,q)}$:

## [Mathematical Formula 5]

$$S'_{nx+p,ny+q} = \sum_j h_j^{(p,q)} \sum_i g_i^{(p,q)} S_{x-i,y-j} \qquad \text{(Equation 5)}$$

where

$$g_i^{(0,0)} = \delta_{i,0} \text{ and } h_i^{(0,0)} = \delta_{j,0}.$$

It is generally assumed that the horizontal interpolation filter $g^{(p,q)}$ is independent of the vertical sub-pel position q, namely, that $g^{(p,q)} = g^{(p)}$ and that the vertical interpolation filter does not affect the result of the interpolation on a full-pel row, namely, that $h_j^{(p,0)} = \delta_{j,0}$.

In this case, the two-dimensional interpolation can be considered as a two-step process: In a first step, horizontal interpolation is performed in order to determine pixel values at sub-pel positions on a "full-pel row". In a second step, pixel values on sub-pel rows are determined by applying vertical interpolation to pixel values determined in the first step. With these assumptions, filter coefficients for $g^{(p)}$ and $h^{(p,q)}$ can for can readily be determined from Equations 3 to 5.

As described above, by adaptively determining filter properties and filter coefficients of the interpolation filters, it is possible to increase prediction accuracy. Thereby, the video encoder 100 calculates a prediction error based on high-accuracy motion compensation, which makes it possible to reduce the prediction error and improve coding efficiency.

However, for correct decoding of the video decoder, it is necessary to transmit the determined filter properties and filter coefficients to the video decoder. Since transmitting the filter properties and filter coefficients of adaptive filters may result in a high additional bit-rate, the overall coding gain can be reduced due to overhead information, especially for video sequences with small spatial resolution and in the case of non-separable filters.

In order to improve coding efficiency, in other words, to reduce the side overhead information, it may be assumed that statistical properties of an image are symmetric.

For example, the filter coefficients are taken to be equal in case the distance of the corresponding full-pel positions to the current sub-pel position are equal. However, due to artifacts in the signal like aliasing or due to displacement estimation errors, the symmetry assumption may not be valid for all sequences. Thus, this may lead to a loss of coding efficiency gains due to the limited adaptation of the filter to the signal statistics.

Hence, there is a need for a universal and efficient way to apply adaptive interpolation filters and for an efficient way to signal adaptive interpolation filter elements.

According to the embodiments of the present invention, a universal way to apply adaptive interpolation filters is provided that includes the usage of different filter types (separable, non-separable), filter symmetries, filter length and differential coding of filter coefficients depending on the sub-pel position (namely, a predictive coding of filter coefficients).

(EXPLOITING FILTER SYMMETRIES AND LIMITATIONS)

The following describes the processing of exploiting filter symmetries and limitations when the motion compensation prediction unit 160 determines filter properties. First, for simple explanation, the exploitation of filter symmetries is summarized for the case of applying a one-dimensional horizontal interpolation filter as one example.

The motion compensation prediction unit 160 exploits symmetries when filter coefficients are determined according to the filter properties described as above. The symmetries can be classified into a case where the filter coefficients themselves of the interpolation filter are symmetric, and a case where interpolation filters have a symmetry relation between two sub-pel positions.

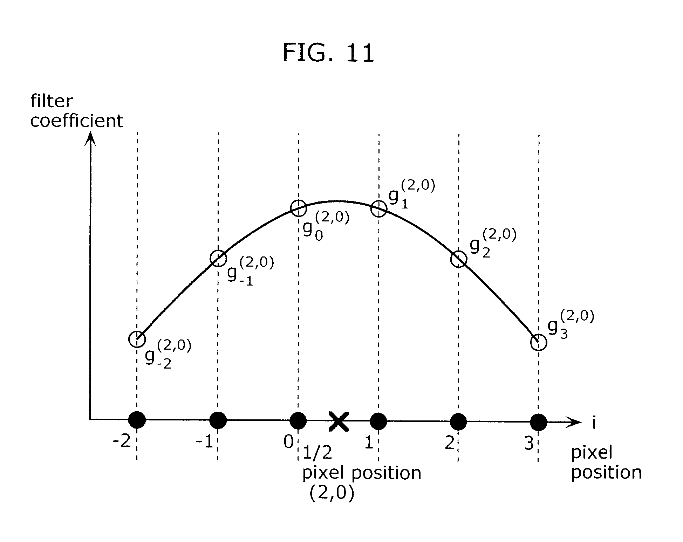

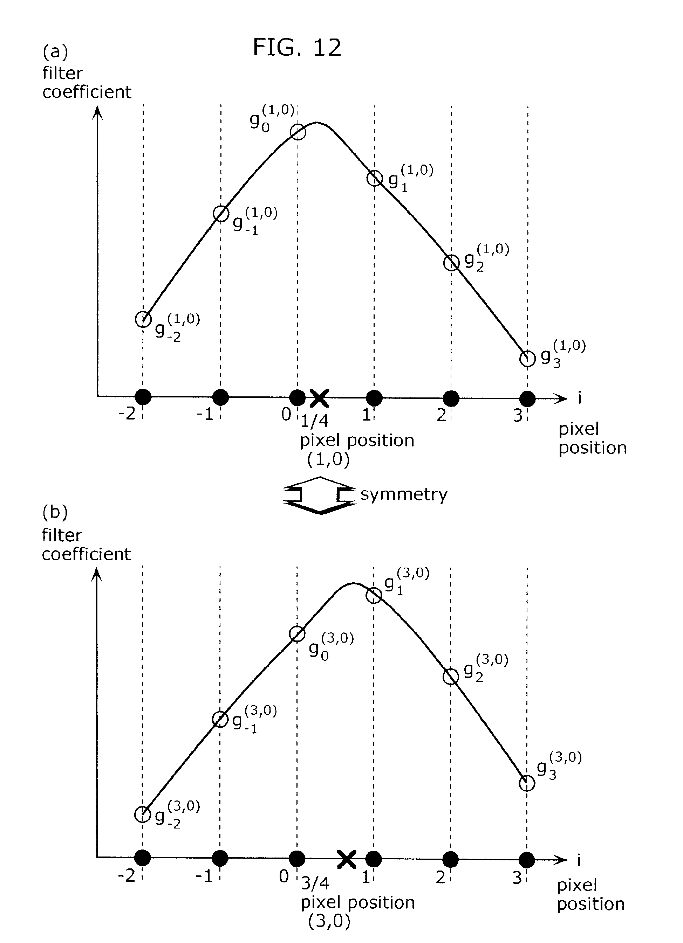

For example, when a filter type of the interpolation filter is symmetric, in other words, when filter coefficients of the interpolation filter are symmetric, at least two filter coefficients having symmetry relation among the filter coefficients of the interpolation filter are determined (see FIG. 11). Or, the motion compensation prediction unit 160 determines a plurality of filter coefficients of the interpolation filter for a single sub pixel, among at least two sub pixels located at positions which are symmetric with respect to at least one predetermined axis (see FIG. 12).

FIG. 11 is a graph plotting an example of an interpolation filter having symmetric filter coefficients. FIG. 11 plots a relation between (i) filter coefficients of a one-dimensional 6-tap filter for calculating a pixel value at a half-pel position (Mark X) and (ii) respective pixel positions. In FIG. 11, filled circles denote full-pel positions.

Filter coefficients weight six full-pel positions and a half-pel position $(p, q) = (2, 0)$ is located at the middle of them. As shown in FIG. 11, the filter coefficients are symmetric left and right. More specifically, the filter coefficients $g_i^{(2,0)}$ for weighting pixel values at pixel positions (where $i=-2, -1, 0, 1, 2, 3$) have relations of $g_0^{(2,0)} = g_1^{(2,0)}$ $g_{-1}^{(2,0)} = g_2^{(2,0)}$ and $g_{-2}^{(2,0)} = g_3^{(2,0)}$.

Therefore, the motion compensation prediction unit 160 needs to determine only three (for example, $g_{-2}^{(2,0)}$, $g_{-1}^{(2,0)}$, and $g_0^{(2,0)}$) of the six filter coefficients. Thereby, it is possible to reduce a processing amount required for determining filter coefficients.

When symmetries are not exploited, it is necessary to transmit six filter coefficients to the video decoder 200. However, when symmetries are exploited, only three filter coefficients and information indicating that the filter coefficients are symmetric are to be transmitted, which reduces a coding amount.

FIG. 12 is a graph plotting an example of interpolation filters having a symmetry relation between two sub-pel positions. FIG. 12 (a) plots a relation between (i) filter coefficients of a one-dimensional 6-tap filter for calculating a pixel value at a quarter-pel position (Mark X) and (ii) respective pixel positions. FIG. 12 (b) plots a relation between (i) filter coefficients of a one-dimensional 6-tap filter for calculating a pixel value at a three-quarter-pel position (Mark X) and (ii) respective pixel positions. In FIG. 12, filled circles denote full-pel positions.

As shown in (a) and (b) of FIG. 12, the interpolation filter $g^{(1,0)}$ for calculating a pixel value at a quarter-pel position $(p, q) = (1, 0)$ and the interpolation filter $g^{(3,0)}$ for calculating a pixel value at a three-quarter-pel position $(p, q)$ $= (3, 0)$ have a horizontal symmetry relation. In other words, $g_{-2}^{(1,0)}=g_3^{(3,0)}$, $g_{-1}^{(1,0)}=g_2^{(3,0)}$, $g_0^{(1,0)}=g_1^{(3,0)}$, $g_1^{(1,0)}=g_0^{(3,0)}$, $g_2^{(1,0)}=g_{-1}^{(3,0)}$, and $g_3^{(1,0)}=g_{-2}^{(3,0)}$.

When symmetries are not exploited, the motion compensation prediction unit 160 needs to determine 12 filter coefficients for two sub-pel position. However, when symmetries are exploited, the motion compensation prediction unit 160 needs to determine only six filter coefficients (for example, filter coefficients of the interpolation filter $g^{(1,0)}$ at a quarter-pel position). This reduces a processing amount required for determining filter coefficients. In addition, a coding amount to be transmitted to the video decoder 200 can be reduced.

As described above, by exploiting symmetries, the motion compensation prediction unit 160 can reduce a processing amount required for determining coefficients and also reduce a coding amount to be transmitted.

Next, the processing of exploiting symmetries is described in more detail with reference to figures and equations.

By applying symmetric and non-symmetric interpolation filters, it is possible to control the amount of overhead information that is added to the bit-stream by transmitting filter coefficients. For instance, for high resolution sequences it may be useful to transmit non-symmetric filters to achieve an optimal adaptation of the filter to the signal statistics, whereas for sequences with low resolution it may be necessary to apply symmetric filters in order to reduce the amount of overhead information. Each time symmetries are exploited, the corresponding filters at different sub-pel positions are jointly optimized. This may reduce the efficiency of the prediction in the case of input signals containing aliasing or due to inaccurate motion estimation. It should be noted that switching between symmetric and non-symmetric filters can be performed in a sub-pel position dependent manner in order to optimize accuracy of motion compensation prediction versus signaling overhead.

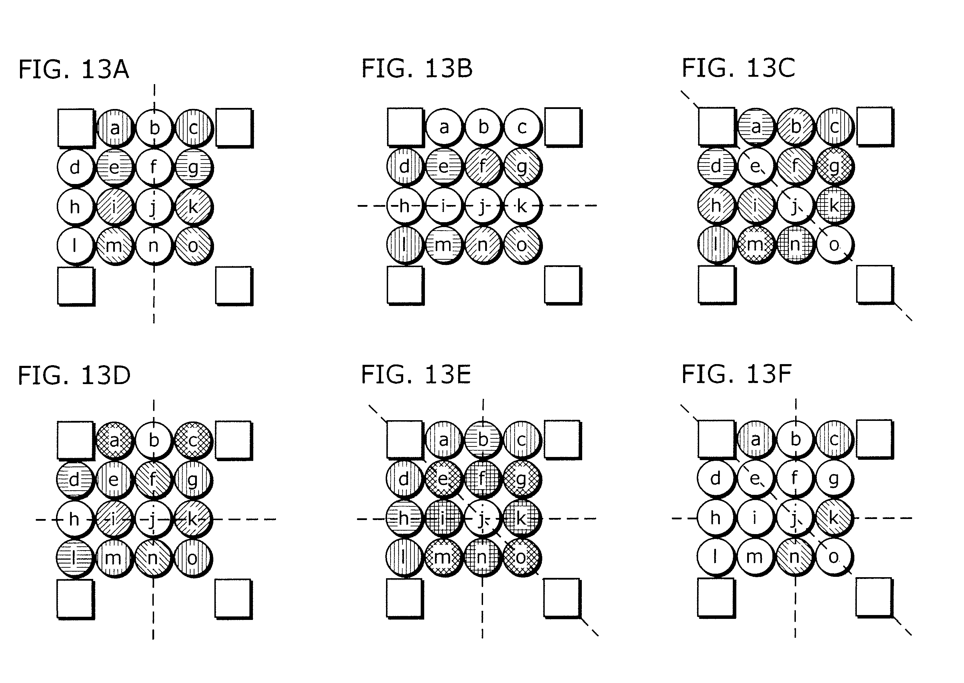

Each of FIGS. 13A to 13F provides an overview over symmetry of the adaptive interpolation filters for n=4, namely, for quarter-pel resolution. In each of the figures, full-pel and sub-pel positions are indicated by squares and circles, respectively. Sub-pel positions are further denoted by characters "a", "b", ..., "o". Hatching is used to illustrate symmetry between interpolation filters at different sub-pel positions. Filter coefficients at sub-pel positions with like hatching can be derived by applying a suitable symmetry operation, as detailed below.

FIG. 13A is a diagram illustrating a symmetry relation among sub-pel positions in the case of applying interpolation filters that are symmetric with respect to a vertical axis (dashed line). In this case, filter coefficients of the symmetric interpolation filters have a relation determined in the following Equation 6.

## [Mathematical Formula 6]

$$f_{i,j}^{(p,q)} = f_{1-i,j}^{(n-p,q)} \qquad \text{(Equation 6)}$$

In other words, filter coefficients of an interpolation filter that is specific for sub-pel position $(p, q)$ can be derived from filter coefficients of an interpolation filter that is specific for a symmetric sub-pel position $(n-p, q)$ by applying an appropriate symmetry operation, which is a reflection with respect to the vertical axis, namely, (i, j)→(1-i, j) as shown in FIG. 12.

As described above, as illustrated in different hatchings in FIG. 13A, each pair of the sub-pel positions: "a" and "c"; "e" and "g"; "i" and "k"; and "m" and "o" has a symmetry relation. By determining filter coefficients of one of the sub-pel positions in a symmetry relation, it is possible to determine filter coefficients of the other sub-pel position. For example, when an interpolation filter of the sub-pel position "a" is mirrored based on the vertical axis, an interpolation filter of the sub-pel position "c" can be obtained.

It should be noted that filter coefficients of an interpolation filter that is specific for a sub-pel position ("b", "f", "j", or "n" in FIG. 13A) located on the mirror axis (dashed line in FIG. 13A) are symmetric to themselves as shown in FIG. 11, namely, $f_{i,j}^{(n/2,q)} = f_{i-1,j}^{(n/2,q)}$ thus reducing the number of independent coefficients that have to be determined.

FIG. 13B is a diagram illustrating a symmetry relation among sub-pel positions in the case of applying interpolation filters that are symmetric with respect to a horizontal axis (dashed line). In this case, filter coefficients of the symmetric interpolation filters have a relation determined in the following Equation 7.

## [Mathematical Formula 7]

$$f_{i,j}^{(p,q)} = f_{i,1-j}^{(p,n-q)} \qquad \text{(Equation 7)}$$

In other words, filter coefficients of an interpolation filter that is specific for sub-pel position (p, q) can be derived from filter coefficients of an interpolation filter that is specific for a symmetric sub-pel position (p, n-q) by applying an appropriate symmetry operation, which is a reflection with respect to the horizontal axis, namely, (i, j)→(i, 1-j) as shown in FIG. 12.

As described above, as illustrated in different hatchings in FIG. 13B, each pair of the sub-pel positions: "d" and "l"; "e" and "m"; "f" and "n"; and "g" and "o" has a symmetry relation. By determining filter coefficients of one of the sub-pel positions in a symmetry relation, it is possible to determine filter coefficients of the other sub-pel position. For example, when an interpolation filter of the sub-pel position d is mirrored based on the horizontal axis, an interpolation filter of the sub-pel position "l" can be obtained.

It should be noted that filter coefficients of an interpolation filter that is specific for a sub-pel position ("h", "i", "j", or "k" in FIG. 13B) located on the mirror axis (dashed line in FIG. 13B) are symmetric to themselves as shown in FIG. 11, namely, $f_{i,j}^{(p,n/2)} = f_{i,1-j}^{(p,n/2)}$, thus reducing the number of independent coefficients that have to be determined.

FIG. 13C is a diagram illustrating a symmetry relation among sub-pel positions in the case of applying interpolation filters that are symmetric with respect to a diagonal axis (dashed line). In this case, filter coefficients of the symmetric interpolation filters have a relation determined in the following Equation 8.

## [Mathematical Formula 8]

$$f_{i,j}^{(p,q)} = f_{j,i}^{(q,p)} \qquad \text{(Equation 8)}$$

In other words, filter coefficients of an interpolation filter that is specific for sub-pel position (p, q) can be derived from filter coefficients of an interpolation filter that is specific for a symmetric sub-pel position (q, p) by applying an appropriate symmetry operation, which is a reflection with respect to the diagonal axis, namely (i, j)→(j, i) as shown in FIG. 12.

As described above, as illustrated in different hatchings in FIG. 13C, each pair of the sub-pel positions: "a" and "d"; "d" and "h"; "c" and "l"; "f" and "i"; "g" and "m"; and "k" and "n" has a symmetry relation. By determining filter coefficients of one of the sub-pel positions in a symmetry relation, it is possible to determine filter coefficients of the other sub-pel position. For example, when an interpolation filter of the sub-pel position "a" is mirrored based on the diagonal axis, an interpolation filter of the sub-pel position "d" can be obtained.

It should be noted that filter coefficients of an interpolation filter that is specific for a sub-pel position ("e", "j", or "o" in FIG. 13C) located on the mirror axis (dashed line in FIG. 13C) are symmetric to themselves as shown in FIG. 11, namely, $f_{i,j}^{(p,p)} = f_{i,j}^{(p,p)}$, thus reducing the number of independent coefficients that have to be determined.

FIGS. 13D and 13E illustrate that the mirror symmetries described above are combined. FIG. 13D is a diagram illustrating a symmetry relation between sub-pel positions in the case of applying adaptive interpolation filters that are symmetric with respect to vertical and horizontal axes. As illustrated in different hatchings in FIG. 13D, each pair of the sub-pel positions: "a" and "c"; "d" and "l"; "e" and "g"; "m" and "o"; "f" and "n"; and "i" and "k" has a symmetry relation. By determining filter coefficients of one of the sub-pel positions in a symmetry relation, it is possible to determine filter coefficients of the other sub-pel position.

FIG. 13E is a diagram illustrating a symmetry relation between sub-pel positions in the case of applying adaptive interpolation filters that are symmetric with respect to vertical, horizontal, and diagonal axes. As illustrated in different hatchings in FIG. 13E, each pair of the sub-pel positions: "a", "c", "d", and "l"; "b" and "h"; "e", "g", "m", and "o"; and "f", "i", "k", and "n" has a symmetry relation. By determining filter coefficients of one of the sub-pel positions in a symmetry relation, it is possible to determine filter coefficients of the other sub-pel position.

Each of the above symmetries or combinations thereof may be employed in order to reduce the number of independent filter coefficients that have to be determined and signaled, thus improving the robustness of the determination process and reducing the signaling overhead.

It should also be noted that any of the above symmetries need not necessarily apply for all sub-pel specific interpolation filters. Rather, each of the above symmetries may be applied to only a subset of the adaptive interpolation filters, for instance only to certain sub-pel positions, such as off-diagonal positions with $p{\neq}q$. Further, only individual pairs of sub-pel specific interpolation filters may be assumed to be symmetric according to any of the above symmetry relations. This is illustrated in FIG. 13F.

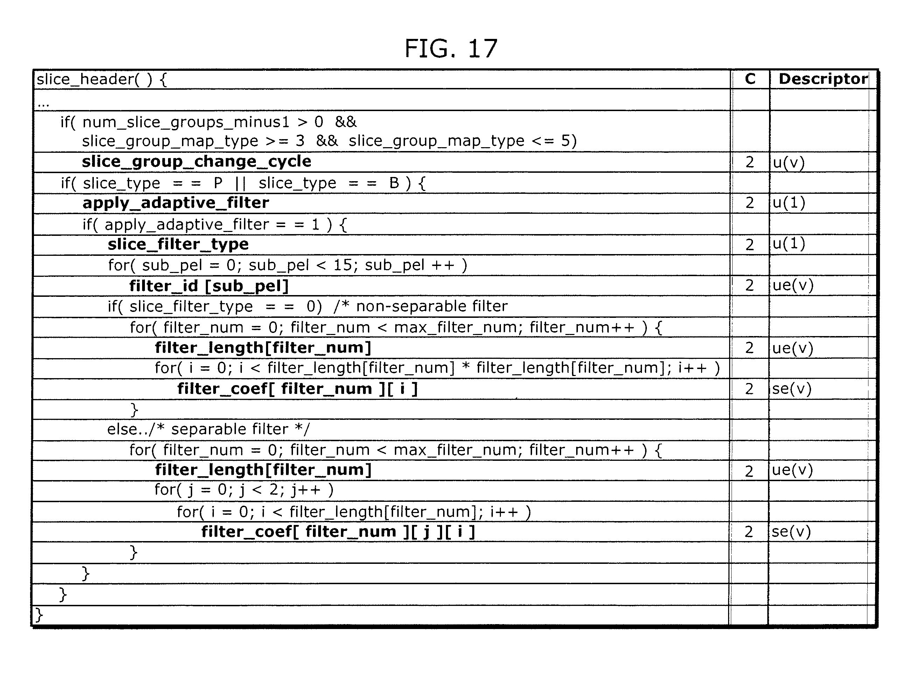

FIG. 13F is a diagram illustrating a symmetry relation between sub-pel positions in the case of applying only a part of the symmetry relation. In FIG. 17, interpolation filters for sub-pel positions "a" and "c" are symmetric as well as those for sub-pel positions "k" and "n".

Apart from symmetries, other limitations may be employed in order to reduce the number of independent filter coefficients of the adaptive interpolation filter. It may for instance be assumed that the two-dimensional adaptive interpolation filter reduces to a one-dimensional interpolation filter on full-pel columns (p=0) and/or on full-pel rows (q=0). The adaptive interpolation filter is thus determined by the following Equation 9 and/or Equation 10.

**[Mathematical Formula 9]**

$$f_{i,j}^{(0,q)} = \delta_{i,0}\, h_j^{(q)} \qquad \text{(Equation 9)}$$

**[Mathematical Formula 10]**

$$f_{i,j}^{(p,0)} = g_i^{(p)}\, \delta_{j,0} \qquad \text{(Equation 10)}$$

Another frequently employed limitation is the assumption of separability, for example, a limitation to two-dimensional interpolation filters that can be decomposed into two one-dimensional interpolation filters. A separable adaptive interpolation filter is determined by the following Equation 11.

**[Mathematical Formula 11]**

$$f_{i,j}^{(p,q)} = g_i^{(p,q)}\, h_j^{(p,q)} \qquad \text{(Equation 11)}$$

Here, $g_i^{(p,q)}$ and $h_j^{(p,q)}$ denote filter coefficients of a horizontal and a vertical one-dimensional interpolation filter, respectively. In the case of a 6x6 tap adaptive interpolation filter the number of independent filter coefficients reduces from 6 x 6 = 36 coefficients per sub-pel position for a non-separable filter to 6 + 6 = 12 coefficients per sub-pel position for the two one-dimensional filters.

The number of independent filter coefficients may be further reduced by assuming the horizontal and/or the vertical one-dimensional interpolation filters to be invariant with respect to sub-pel translations. Hence, the following Equation 12 and/or Equation 13 are given.

**[Mathematical Formula 12]**

$$f_{i,j}^{(p,q)} = g_i^{(p,q)} h_j^{(q)} \qquad \text{(Equation 12)}$$

**[Mathematical Formula 13]**

$$f_{i,j}^{(p,q)} = g_i^{(p)} h_j^{(p,q)} \qquad \text{(Equation 13)}$$

where $g_i^{(p)}$ and $h_j^{(p)}$ denote filter coefficients of a horizontal and a vertical one-dimensional interpolation filter that is independent of the vertical and horizontal sub-pel position, respectively.

It should also be noted that the above limitations may also be combined with each other as well as with the above symmetries in order to further reduce the signaling overhead. A particularly preferred combination of the above limitations is a separable adaptive interpolation filter with one-dimensional interpolation on full-pel rows and columns together with a vertically translation invariant horizontal interpolation filter, namely, an interpolation filter determined by the following Equation 14.

**[Mathematical Formula 14]**

$$f_{i,j}^{(p,q)} = g_i^{(p)} h_j^{(p,q)} , \; h_j^{(p,0)} = \delta_{j,0} \qquad \text{(Equation 14)}$$

A filter of this form can be estimated from video data by determining the horizontal interpolation filter from the input video data in a first step, applying the thus determined horizontal interpolation filter and determining the vertical interpolation filter from the horizontally interpolated video data in a second step.

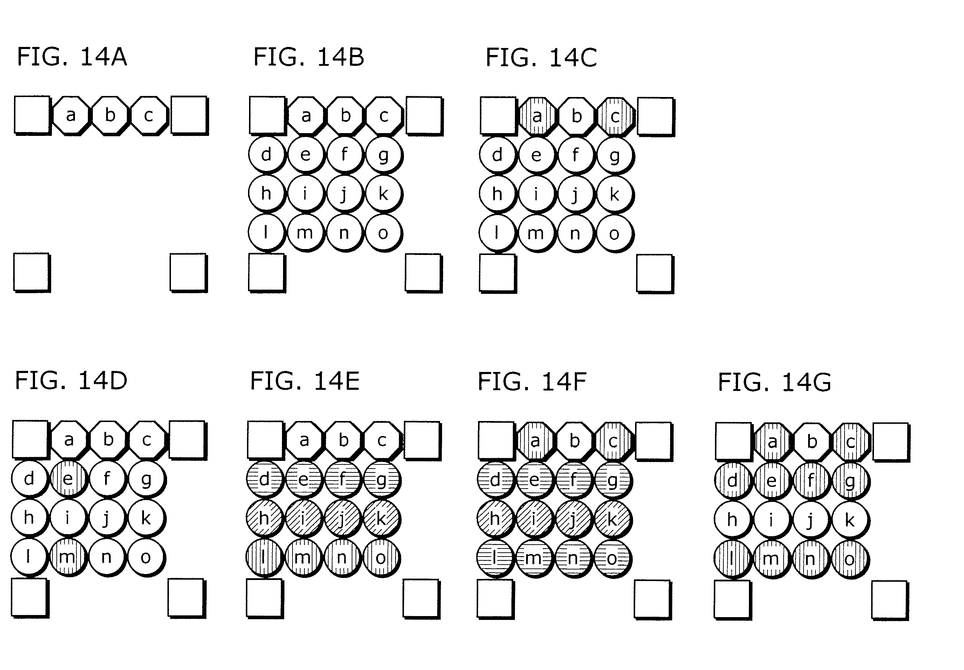

This method is illustrated in FIGS. 14A and 14B. FIG. 14A is a diagram illustrating an example of sub-pel positions in the case of applying a horizontal interpolation filter in a separable adaptive interpolation filter. In FIG. 14A, octagons indicate sub-pel positions "a", "b", and "c", whose filters are calculated in the first step.

FIG. 14B is a diagram illustrating an example of sub-pel positions in the case of applying a vertical interpolation filter in a separable adaptive interpolation filter. Circles in FIG. 14B indicate the remaining sub-pel positions, where interpolation filters are determined in the second step.

FIG. 14C is a diagram illustrating an example of a symmetry relation between sub-pel positions in the case of applying a separable adaptive interpolation filter. FIG. 14C illustrates an example of a separable adaptive interpolation filter including a symmetry filter having a horizontal symmetry relation between sub-pel positions "a" and "c". More specifically, when an interpolation filter of the sub-pel position "a" is mirrored based on the vertical axis, an interpolation filter of the sub-pel position "c" can be obtained.

FIG. 14D is a diagram illustrating an example of another symmetry relation between sub-pel positions in the case of applying a separable adaptive interpolation filter. FIG. 14D illustrates an example of a separable adaptive interpolation filter including a symmetry filter having a vertical symmetry relation between sub-pel positions "e" and "m". More specifically, when an interpolation filter of the sub-pel position "e" is mirrored based on the horizontal axis, an interpolation filter of the sub-pel position "m" can be obtained.

FIG. 14E is a diagram illustrating an example of a translation relation between sub-pel positions in the case of applying a separable adaptive interpolation filter. FIG. 14E illustrates an example in which a vertical interpolation filter $h_j^{(q)}$ of a sub-pel position "d" (see FIG. 12) is translated in a horizontal direction, in other words, a vertical interpolation filter of the sub-pel position "d" is applied also for sub-pel positions "e", "f", and "g". The same goes for a relation among sub-pel positions "h", "i", "j", and "k", and a relation among sub-pel positions "l", "m", "n", and "o".

FIG. 14F is a diagram illustrating an example of a symmetry relation and a translation relation among sub-pel positions in the case of applying a separable adaptive interpolation filter. FIG. 14F is a combination of FIGS. 14C, 14D, and 14E, and the adaptive interpolation filter consists only of a one-dimensional interpolation filter that is specific for respective four independent sub-pel positions.

FIG. 14G is a diagram illustrating another example of a symmetry relation and a translation relation among sub-pel positions in the case of applying a separable adaptive interpolation filter. FIG. 14G illustrates the case where a symmetry filter having a horizontal symmetry relation is employed as a symmetry filter having a vertical symmetry relation. More specifically, in this case, sub-pel positions "a" and "d" are in a rotation symmetry relation. Since the sub-pel positions "a" and "d" are quarter-pel positions, an interpolation filter can be employed for both of them. Likewise, since sub-pel positions "b" and "h" are half-pel positions, an interpolation filter can be employed for both of them.

Furthermore, as illustrated in FIG. 14E, an interpolation filter of the sub-pel position "d" can be employed also for sub-pel positions "e", "f", and "g". The same goes for a relation among sub-pel positions "h", "i", "j", and "k", and a relation among sub-pel positions "l" , "m" "n", and "o".

Thereby, in the example illustrated in FIG. 14G, only a single one-dimensional interpolation filter of two sub-pel positions "a" and "b", for example, are to be determined.

The following describes a case where the video decoder 200 decodes and determines interpolation filters in the example of FIG. 14G according to the flowchart of FIG. 6B. For instance, first, determination of an interpolation filter of the sub-pel position "a" is explained.

Since the interpolation filter of the sub-pel position "a" does not have symmetry filter coefficients as shown in (a) of FIG. 12 (No at S301), then the motion compensation prediction unit 260 decodes and determines all filter coefficients of the interpolation filter (S303).

Since the sub-pel position "a" has a symmetry relation with the sub-pel position "c", an interpolation filter of the sub-pel position "a" is mirrored to determine an interpolation filter of the sub-pel position "c". In addition, since the sub-pel position "a" has a rotation symmetry relation with the sub-pel position "d", the interpolation filter of the sub-pel position "a" is rotated to determine an interpolation filter of the sub-pel position "d". Since the sub-pel position "c" has a rotation symmetry relation with the sub-pel position "l", an interpolation filter of the sub-pel position "l" is also determined in the above manner. Furthermore, since the sub-pel position "d" has a translation relation with the sub-pel position "e", the interpolation filter of the sub-pel position "d" is translated to determine an interpolation filter of the sub-pel position "e". In the same manner, interpolation filters of the sub-pel positions "f", "g", "m", "n", and "o" are determined (S304).

Here, since an interpolation filter of the sub-pel position "b" has not yet been determined (No at S305), then the motion compensation prediction unit 160 determines the interpolation filter of the sub-pel position "b". The interpolation filter of the sub-pel position "b" has symmetric filter coefficients as shown in FIG. 11 (Yes at S301), only a half of the filter coefficients of the interpolation filter are decoded and the decoded filter coefficients are mirrored to determine the other half of the filter coefficients (S302).

Since the sub-pel position "b" has a rotation symmetry relation with the sub-pel position "h", an interpolation filter of the sub-pel position "b" is rotated to determine an interpolation filter of the sub-pel position "h". Furthermore, since the sub-pel position "h" has a translation relation with the sub-pel position "i", the interpolation filter of the sub-pel position "h" is translated to determine an interpolation filter of the sub-pel position "i". In the same manner, interpolation filters of the sub-pel positions "j" and "k" are determined (S304).

As described above, since all of the interpolation filters have been decoded and determined (Yes at S305), then motion compensation with sub-pel resolution is performed using the interpolation filters.

It should be noted that it has been described with the flowchart of FIG. 6B that, when an interpolation filter of a single sub-pel position is determined, all interpolation filters having symmetry relation with the sub-pel position are determined. However, it is also possible to determine interpolation filters in a predetermined order of sub-pel positions (for example, "a" → "b" → ...→ "o").

In this case, it is determined whether or not a target sub-pel position has a symmetry relation with any other sub-pel position. If there is no symmetry relation, then filter coefficients of an interpolation filter for the target sub-pel position are determined. On the other hand, if there is a symmetry relation with a different sub-pel position and an interpolation filter of the different symmetry relation has already been determined, the interpolation filter for the target sub-pel position are determined by mirroring, translation, or rotation. Here, if it is determined, in the determination of the filter coefficients, whether or not the target interpolation filter itself is symmetric (in other words, has symmetric filter coefficients), and thereby the determination is made that the target interpolation filter is symmetric, then only a half of filter coefficients of the interpolation filter are determined, and the determined filter coefficients are mirrored to be determined as the other half of the filter coefficients.

When the above processing is performed in an order of sub-pel positions (for example, "a" → "b" → ... → "o"), an interpolation filter of each sub-pel position is determined.

As described above, by employing any of the above described symmetries and limitations or combinations thereof, the motion compensation prediction unit 160 can set the properties of the interpolation filter as needed. The possibility of reducing the number of independent filter coefficients may for instance be employed to optimize the trade-off between a faithful interpolation filter that reduced the prediction error as far as possible versus the signaling overhead caused by coding a lot of independent filter coefficients.

In general, when a filter type is adaptively set and filter coefficients are also adaptively determined, a coding amount to be transmitted to the video decoder is significantly increased. In order to solve the above drawback, by employing two kinds of symmetries, which are symmetry between sub-pel positions and symmetry between filter coefficients in an interpolation filter, it is possible to significantly reduce the number of filters to be determined and coded. As a result, the coding amount is significantly reduced, and thereby coding efficiency can be improved while high prediction efficiency is kept.

To this end, the filter properties may for instance be set in accordance with the image content, in particular in accordance with the amount of motion present in the images. The filter properties may also be set in accordance with the spatial image resolution or depending on the compression ratio that is to be achieved. Filter properties may for instance be selected from a finite number of candidate properties, depending on which of the candidate properties yields the best compression ratio.

Further, the motion compensation prediction unit 160 may set filter properties automatically, as described above, or manually by allowing a user to select the most appropriate filter properties. Setting of the filter properties may occur only once per movie or repetitively on a slice-by-slice or sequence-by-sequence basis. However, the filter properties may also be set more or less frequently without deviating from the present invention.

(SIGNALING)

The following describes the processing of transmitting (signaling) coded signals generated by the entropy coding unit 190 (namely, an output bitstream) to the video decoder.

In the video encoder 100 according to the embodiment of the present invention, filter properties (filter type, the number of taps, and the like) and filter coefficients are not fixed. Therefore, in order to allow the decoder to decode the received coded video data, the filter coefficients have to be signaled. Coding efficiency can be optimized if the filter coefficients are coded together with the coded video data by exploiting redundancies due to the set filter properties within the set of filter coefficients.

For example, symmetric interpolation filters for distinct sub-pel positions need to be coded only once. Similarly, interpolation filters that have filter coefficients symmetric to themselves can be efficiently coded by coding only filter coefficients that cannot be reconstructed from previously coded filter coefficients. More generally, any limitation to the interpolation filter that reduces the number of independent filter coefficients can be exploited by coding only those filter coefficients that cannot be derived from previously coded coefficients in accordance with said limitation. Separable interpolation filters, for instance, are preferably coded by coding filter coefficients of the two one-dimensional interpolation filters rather than coding the larger number of coefficients of the two-dimensional interpolation filter itself.

In any case, the filter properties that are exploited for reducing the signaling overhead have also to be signaled to the decoder. This may be achieved either by means of explicit or implicit signaling.

Explicit signaling means that the filter properties are explicitly coded together with the coded video data. This provides greatest flexibility with respect to setting the desired properties at the price of additional signaling overhead.

Implicit signaling, on the other hand, means that information on the filter propertied has to be derived by the decoder based on prior knowledge of how the encoder selects filter properties. For example, the encoder may transmit only one interpolation filter of each pair of symmetric interpolation filters and the decoder may judge that any non-transmitted interpolation filter is symmetric to a corresponding one of the transmitted filters. Obviously, this form of signaling is less flexible as it requires an agreement between the encoder and the decoder about the symmetries that may actually be employed. However, signaling overhead is reduced to a minimum.

In the following, concrete signaling examples are provided together with an exemplary syntax elements on slice level. It is to be understood, that these examples are for illustrative purpose only and do not imply any restriction of the scope of the present invention.

According to a first signaling example, only one flag is needed per filter type to signal whether or not a symmetric filter is applied. For each filter type (for example, separable or non-separable) one specific symmetry pattern is supported that is fixed and known by encoder and decoder. As only one symmetry pattern is supported, this approach offers limited flexibility to control the trade-off between overhead bit-rate for filter coefficients and resulting prediction efficiency.

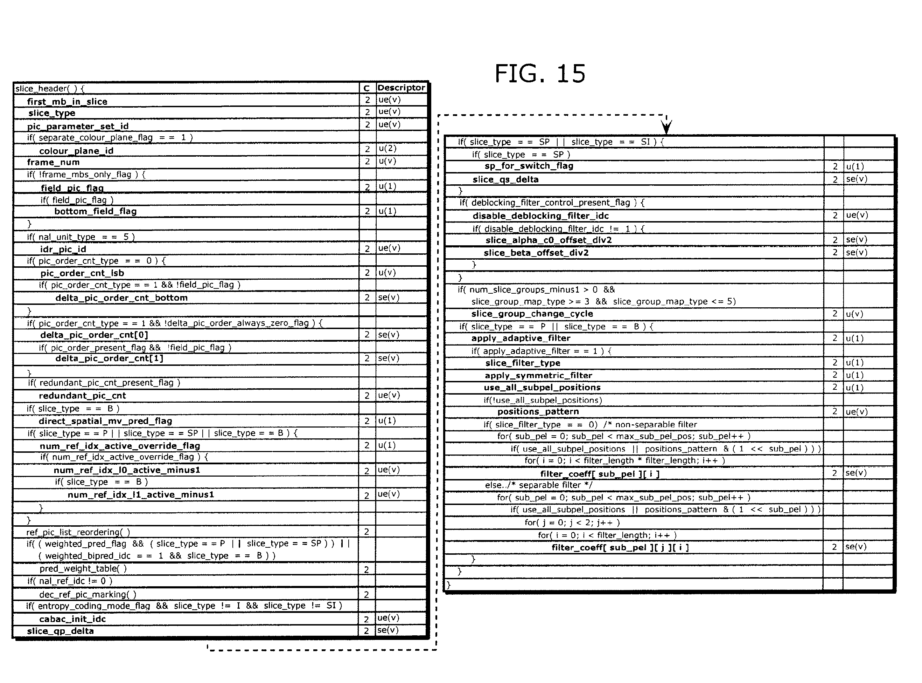

FIG. 15 is a table indicating first syntax elements for executing signaling according to the embodiment of the present invention. FIG. 15 shows exemplary syntax elements on slice level with signaling of symmetry for non-separable and separable filters in the case of quarter-pel precision and 6-tap filter length prediction. Here, filter symmetry and a filter are suggestively signaled.

Here, apply_adaptive_filter is 0 for a fixed filter (non-adaptive filter) and 1 for an adaptive filter; slice_filter_type (slice level adaptive filter) is 0 for a non-separable filter and 1 for a separable filter; apply_symmetric_filter is 0 for a non-symmetric filter and 1 for a symmetric filter; use_all_subpel_positions is 0 if not all sub-pel positions are calculated by adaptive filters and 1 if all sub-pel positions are calculated by adaptive filters; positions_pattern is a binary mask signaling the sub-pel positions where adaptive filters are applied with 0 for fixed filter of MPEG-4 AVC or H.264 and 1 for an adaptive filter.

The value of max_sub_pel_pos depends on the value of apply_symmetric_filter. In the case of a non-symmetric filter (in other words, apply_symmetric_filter = 0), max_sub_pel_pos equals to the total number of sub-pel positions (for example, for quarter-pel motion vector resolution: max_sub_pel_pos = 15). In the case of a symmetric filter (in other words, apply_symmetric_filter = 1), max_sub_pel_pos is smaller than the total number of sup-pel positions depending on the amount of symmetries that is exploited.

In the case of a symmetric filter, if apply_symmetric_filter equals to 1, the decoder restores the missing filter coefficients from the transmitted filter coefficients.

As described above, according to the first signaling syntax, flags are prepared to indicate whether a filer type of an interpolation filter is adaptive or non-adaptive, separable or non-separable, and symmetry or asymmetry. In addition, for each sub-pel position, it is possible to determine whether a filter type is adaptive or non-adaptive.

The second signaling example refers to explicit signaling of filter properties. In this example, explicit signaling of symmetry is employed in order to offer a high flexibility for controlling the trade-off between overhead bit-rate for filter coefficients and resulting prediction efficiency. All kinds of symmetries are signaled to the decoder. This concept may lead to increased overhead bit-rate for signaling of the corresponding symmetries.

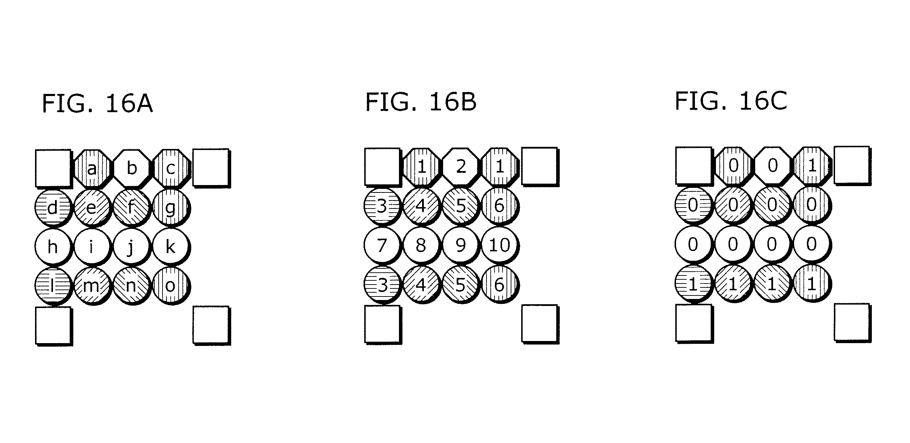

According to the second signaling example, a filter ID is assigned to each distinct filter. This allows for all kinds of symmetries and for an efficient way of signaling. In FIGS. 16A to 16C, different filters have to be transmitted for the chosen symmetry pattern.

FIG. 16A is a diagram illustrating an example of symmetry between sub-pel positions. In FIG. 16A, interpolation filters of sub-pel positions shown by the same shapes (octagons or circles) and the same hatchings are symmetric.

FIG. 16B is a diagram illustrating an example of interpolation filters at sub-pel positions to which filter IDs are allocated. FIG. 16B shows an example where filter IDs are allocated to interpolation filters of sub-pel positions having symmetry as shown in FIG. 16A. More specifically, as shown in FIG. 16B, to each sub-pel position from "a" to "o", the corresponding filter ID is transmitted (In FIG. 16B, {1, 2, 1, 3, 4, 5, 6, 7, 8, 9, 10, 3, 4, 5, 6}). Here, the value of 0 is reserved for the non-adaptive filter such as MPEG-4 AVC or H.264.

For example: Filter ID1 is assigned to sub-pel positions "a" and "c" with filter coefficients {coeff1, coeff2, coeff3, coeff4, coeff5, coeff6}. At sub-pel position "a", the filter is directly applied whereas at sub-pel position "c", the filter is mirrored (={coeff6, coeff5, coeff4, coeff3, coeff2, coeff1}) and then applied.

To decide whether a filter has to be mirrored or not, a decoder has to find the first occurrence of the current filter ID in the scan, for example, to sub-pel position "l" the filter ID3 is assigned; the first occurrence of filter ID3 has been at position "d". Depending on the distance to the next full-pel position (or sub-pel position that has been calculated in the first step (hexagons)), it is obvious that the filter at position "l" has to be a mirrored version of the filter at position "d".

FIG. 17 is a table indicating an excerpt of second syntax elements for executing signaling according to the embodiment of the present invention. FIG. 17 shows, as one example, exemplary syntax elements for explicit signaling of filters and filter symmetries in case of prediction with quarter-pel precision and 6-tap filter length according to the second signaling example. In this example, signaling is done on slice level. It should be noted that it is also possible to do the signaling on sequence or picture level. Furthermore, it is also possible to transmit the filter ID at sequence level (symmetry pattern would be the same throughout the whole sequence) and to update the assigned filters on picture or on slice level. Any other combination can also be considered without departing from the present invention.

Here, apply_adaptive_filter is 0 for a fixed filter and 1 for an adaptive filter; slice_filter_type (slice level adaptive filter) is 0 for a non-separable filter and 1 for a separable filter; filter_ID assigns corresponding filter to each sub-pel position; filter_length [filter_num] signals the length of the filter and addresses filter symmetries as described above; max_filter_num signals the maximum number of filters that have to be transmitted (10 in the case of FIG. 16B) and thus equals to the maximum value of filter ID.

As described above, according to the second syntax elements, it is possible to signal the filter IDs allocated to respective sub-pel positions, and further possible to signal the maximum number of filters that have to be transmitted.

According to the third signaling example, it is besides the signaling described above further possible to transmit a bit-mask (symmetry mask) indicating symmetry or non-symmetry for each sub-pel position as shown in FIG. 16C. FIG. 16C is a diagram illustrating an example of the symmetry mask indicating whether or not symmetries can be exploited for each interpolation filter of a sub-pel position. The value of 0 in the symmetry mask signals that a new filter has been transmitted for the current sub-pel position. The value of 1 in the symmetry mask signals that no new filter has been transmitted for the current sub-pel position.

In the example shown in FIG. 16C, 10 filters (filters corresponding to sub-pel positions having symmetry mask 0) have to be transmitted in addition to the symmetry mask ({0, 0, 1, 0, 0, 0, 0, 0, 0, 0, 0, 1, 1, 1, 1}). The filters are transmitted in ascending order from sub-pel position "a" to sub-pel position "o".

For example, as shown in FIG. 16C, if the symmetry mask signals the value of 1 at sub-pel position "c", the decoder knows that it has to use the mirrored version of the filter assigned to position "a". For position "I", it has to apply the mirrored version of the filter for position "d".

To realize this concept, both the encoder and the decoder have to use the same filter pairs if symmetry is signaled at a certain sub-pel position (for example, "c"→"a", "l"→"d", "m"→"e", ...). That limits the flexibility of the design to the defined symmetry pairs, but reduces the overhead compared the described explicit signaling of symmetry. But still it offers more flexibility than the implicit signaling of symmetry described in the first signaling example.

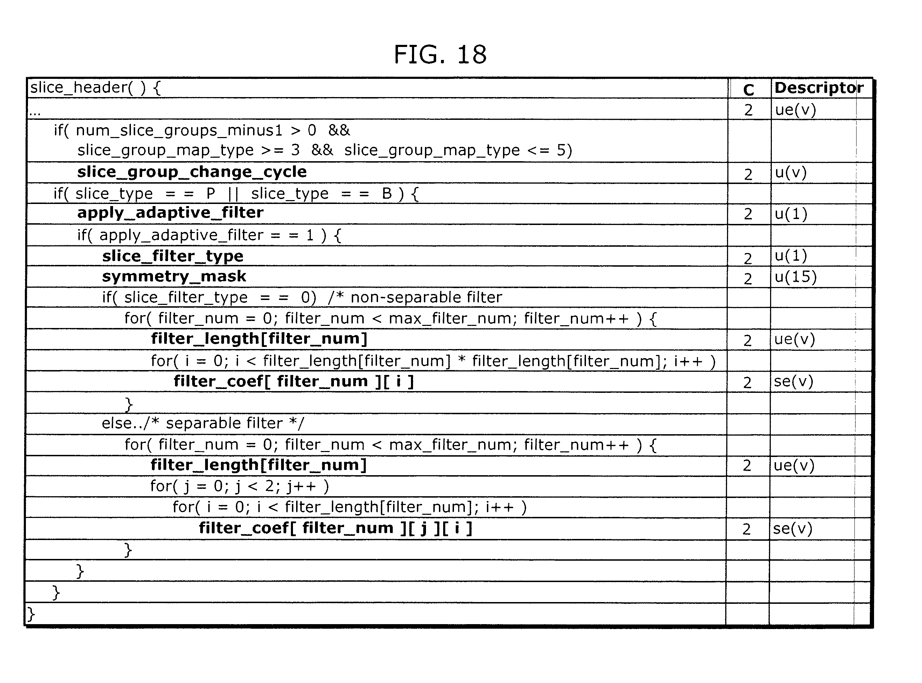

Exemplary syntax for the third signaling example is shown in FIG. 18. FIG. 18 is a table indicating an excerpt of third syntax elements for executing the signaling according to the embodiment of the present invention.

Here, apply_adaptive_filter is 0 for a fixed filter and 1 for an adaptive filter; slice_filter_type (slice level adaptive filter) is 0 for a non-separable filter and 1 for a separable filter; symmetry_mask is a binary pattern signaling symmetry, wherein the Most Significant Bit (MSB) signals mirroring for sub-pel position "a" and the Least Significant Bit (LSB) signals mirroring for sub-pel position "o"; filter_length [filter_num] signals the length of the filter and addresses the above described filter symmetry.

The value of max_filter_num specifies the number of filters that have to be transmitted (here: 10). max_filter_num equals to 15 minus the number of signaled symmetry in symmetry mask (5 in the case of FIG. 16C).

As described above, according to the third syntax elements, by setting symmetry mask, it is possible to easily determine which sub-pel positions have interpolation filters that are symmetric.

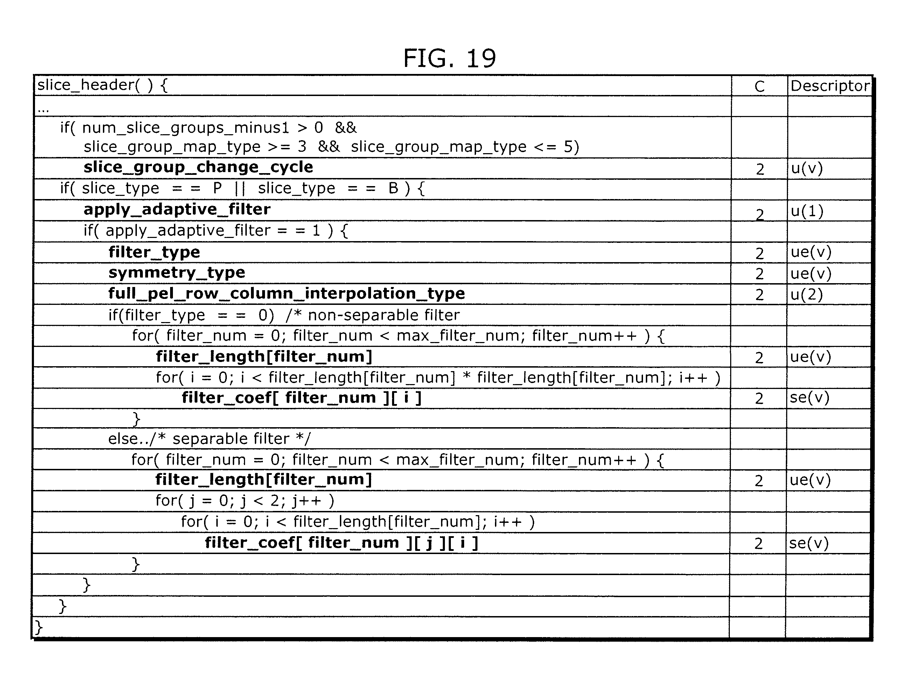

The fourth signaling example refers to the filter properties described above in conjunction with Equations 6 to 14. An excerpt of exemplary syntax for this signaling example is shown in FIG. 19.

FIG. 19 is a table indicating an excerpt of fourth syntax elements for executing the signaling according to the embodiment of the present invention.

Here, the "apply_adaptive_filter" is 0 for a fixed filter and 1 for an adaptive filter. The "filter_type" is 0 for a non-separable filter, 1 for a separable filter (refer to Equation 11), 2 for a separable filter with horizontally translation invariant vertical interpolation filter (refer to Equation 12), 3 for a separable filter with vertically translation invariant horizontal interpolation filter (refer to Equation 13), and 4 for a separable filter with 1D interpolation on full-pel rows/columns and vertically translation invariant horizontal interpolation filter (refer to Equation 14).

The "symmetry type" is 0 for a non symmetric filter, 1 for a horizontally symmetric filter (refer to Equation 6), 2 for a vertically symmetric filter (refer to Equation 7), 3 for a diagonally symmetric filter (refer to Equation 8), and 4 for a diagonally symmetric filter for $p \neq q$ (refer to Equation 8 with $p \neq q$). The "full_pel_row_column_interpolation_type" is 0 for 2D interpolation, 1 for 1D interpolation on full-pel columns (refer to Equation 6), 2 for 1D interpolation on full-pel rows (refer to Equation 7), and 3 for 1D interpolation on full-pel columns and full-pel rows. The "filter_length [filter_num]" signals the length of the filter. The "filter coef" contains quantized filter coefficients. The "max_filter_num" is the number of filters that are transmitted and depends on filter type and symmetries.

According to the embodiment of the present invention, switching between non-separable and separable filters can be performed in a sub-pel position dependent manner. In case of global motion, most of the motion vectors inside one picture point to one specific sub-pel position. Therefore, it is useful to obtain the highest prediction efficiency for this sub-pel position by applying a non-separable filter without exploitation of symmetries there. For all other sub-pel positions (in the case of local motion), it may be efficient to apply separable filters only in order to keep the overhead bit-rate as well as the complexity of the filtering at a low level.

This sub-pel position dependent signaling of separable and non-separable filters can be done on sequence level (SPS), picture level (PPS), slice level down to macroblock level.

The following fifth signaling example shows syntax which includes transmission of one non-separable filter, several separable filters, and the position of the non-separable filter. It should be noted that the transmission of more than one non-separable filter is also possible.

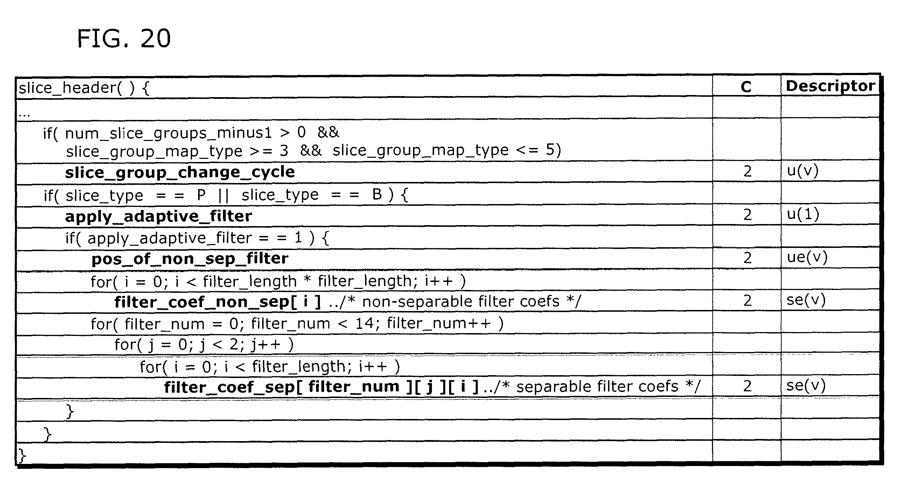

FIG. 20 is a table indicating an excerpt of fifth syntax elements for executing the signaling according to the embodiment of the present invention.

Here, "apply_adaptive_filter" is 0 for a fixed filter, 1 for an adaptive filter; "pos_of_non_sep_filter" signals the sub-pel position where the non-separable filter is applied, namely 0 for sub-pel position "a" and 15 for sub-pel position "o", whereas a non-separable filter is applied to all other sub-pel positions; "filter_coef_non_sep" contains the coefficients of one non-separable filter; and "filter_coef_sep" contains the coefficients of 14 non-separable filters in case of quarter-pel prediction precision.

(DIFFERENTIAL CODING)

In order to reduce the amount of overhead data in case of non-symmetric filters, a differential coding of filter coefficients depending on the sub-pel position can be applied. The idea is to calculate non-symmetric filters in order to enable optimal adaptation of the filter to the signal statistics, but to exploit the similarity of filter coefficients at certain sub-pel positions and therefore to apply a differential coding of filter coefficients at those positions to reduce the amount of overhead data. Thus, there is no joint optimization of filters and therefore no loss of prediction efficiency.

For example, the motion compensation prediction unit 160 causes the internal memory 161 to hold filter coefficients of an immediately-prior slice or an immediately-prior picture. Then, using an internal difference calculation unit (not shown), the motion compensation prediction unit 160 calculates a difference between (a) filter coefficients held in the memory 161 and (b) newly-determined filter coefficients, and then provides only the calculated difference to the entropy coding unit 190. The filter coefficients to be used in the difference calculation are desirably filter coefficients of interpolation filters at the same pixel position, because such interpolation filters at the same pixel position generally have high correlation.

It should be noted that the filter coefficients held in the memory 161 may be filter coefficients of interpolation filter having a predetermined default. The default interpolation filter is, for example, a filter to be used as a non-adaptive interpolation filter.

In the case of a separable filter, for instance, the amount of signaling overhead may be reduced by transmitting filter coefficients of the vertical interpolation filters $h_j^{(p,q)}$ (refer to Equation 11) only in terms of the deviation to an horizontally adjacent interpolation filter as expressed by Equation 15.

**[Mathematical Formula 15]**

$$\Delta h_j^{(p,q)} = h_j^{(p,q)} - h_j^{(p-1,q)} , \ q = 1,\ldots,n-1 \qquad (\text{Equation } 15)$$

Or, as expressed in below Equation 16, in terms of the deviation to the corresponding full-pel row interpolation filter $h_j^{(0,q)}$, the filter coefficient $h_j^{(p,q)}$ of the vertical interpolation filter is transmitted.

**[Mathematical Formula 16]**

$$\Delta h_j^{(p,q)} = h_j^{(p,q)} - h_j^{(0,q)} , \ q = 1,\ldots,n-1 \qquad (\text{Equation } 16)$$

In this manner, the fact is exploited that the vertical one-dimensional interpolation filters are likely to be "almost" invariant with respect to horizontal sub-pel translations. Hence, only the filter coefficients that correspond to a full-pel column need to be transmitted in their entirety, whereas filter coefficients for fractional-pel columns are coded in a differential manner.

Differential coding of filter coefficients may likewise be applied to any of the above described symmetries and limitations of the adaptive interpolation filter. In case of two "almost" symmetric sub-pel specific interpolation filters as shown in FIG. 12, only one of them is coded in its entirety, whereas the other one is differentially coded in form of differences of the individual filter coefficients to a corresponding one of the first filter. For example, in the case of a symmetry with respect to a vertical axis (refer to Equation 6), a difference between filter coefficients is determined in following Equation 17.

**[Mathematical Formula 17]**

$$\Delta f_{i,j}^{(p,q)} = f_{i,j}^{(p,q)} - f_{1-i,j}^{(n-p,q)} \qquad (\text{Equation } 17)$$

Similarly, sub-pel specific interpolation filters with filter coefficients that are "almost" symmetric to themselves as shown in FIG. 11 may also be coded by transmitting a first half (in other words, coefficients with i≦0 in case of a symmetry with respect to a vertical axis, refer to Equation 6) of the coefficients in their entirety and only deviations from the symmetry for the second half (namely, i>0) of the coefficients as expressed in Equation 18.

## [Mathematical Formula 18]

$$\Delta f_{i,j}^{(n/2,q)} = f_{i,j}^{(n/2,q)} - f_{1-i,j}^{(n/2,q)} , i>0 \qquad \text{(Equation 18)}$$

The symmetry that is employed for differential coding has to be signaled to the decoder. This can be achieved either implicitly or explicitly along the lines of the above signaling examples. However, it is to be noted that the symmetry employed for differential coding has to be different from the set filter properties (otherwise, all deviations from this symmetry would be zero), and thus has to be signaled separately.

As described above, it is possible to further reduce a data amount to be coded by coding a difference value between filter coefficients, not the filter coefficients themselves. This improves coding efficiency.

Thus, in the present invention, an adaptive interpolation filter, which optimizes a trade-off between prediction accuracy and signaling overhead, is used in a hybrid video encoder and a video decoder which use motion compensation prediction with sub-pel resolution. In order to achieve this, properties for the adaptive interpolation filter, such as symmetries and other limitations, are predetermined. Thereby, it is possible to control the number of independent filter coefficients.

Furthermore, filter coefficients of adaptive interpolation are determined based on the predetermined filter properties. In addition, the filter coefficients are transmitted to the video decoder so that the video decoder can apply the just same interpolation for motion compensation prediction. The signaling overhead can be reduced also by coding coefficients according to the predetermined filter properties.

Thus, although only the exemplary embodiment of the present invention has been described in detail regarding the video coding method, the video decoding method, and the devices using the methods, the present invention is not limited to the above. Those skilled in the art will be readily appreciate that many modifications are possible in the exemplary embodiment without materially departing from the novel teachings and advantages of the present invention.

Besides the techniques described above, it is possible to further reduce the bit rate for overhead information by applying several other approaches. Three exemplary techniques are described in the following.

If a sequence has similar statistics and characteristics for a couple of pictures, the bit rate for the transmission of filter coefficients can be reduced by differential coding of filter with reference to "higher-level" filters. For example, filters for each sub-pel position are transmitted at sequence level (SPS). Then, it is possible to transmit only the differences between the mentioned sequence-level filters and the current (picture-level, slice-level) filters.

This approach can be applied also to slice-level filters as references and predicted macroblock-level filters, and so on. It is further possible to transmit a flag at picture-level, slice-level, macroblock-level signaling the use of the reference filter transmitted at sequence-level or the use of a new filter that will be transmitted in the following. However, the mentioned techniques have the drawback to be error-prone. If the reference filters are lost due to transmission errors, the predicted filter can not be restored.

Furthermore it is possible to perform a temporal prediction of filter coefficients, namely, only the differences of filter coefficients from one picture (slice) to the next picture (slice) are coded. This may also be connected to motion estimation with different reference pictures, in other words, once a reference picture is decided during motion estimation, the filter coefficients used for prediction will be coded with reference to the filter that was used for the corresponding reference picture. However, also this techniques is error-prone. If the reference filters are lost due to transmission errors, the predicted filter can not be restored.

The overhead bit rate can be reduced to a minimum by applying look-up tables that are known by encoder and decoder. By evaluation of a broad range of sequences, a fixed set of filters depending on sub-pel positions can be defined.

An video encoder chooses the best filters depending on the application and the optimization criterion (high prediction efficiency, low complexity, ...) and transmits only the corresponding table indices. As the video decoder knows the filter look-up table, it can restore the filters from the transmitted table indices. However, this approach has the drawback of leading to a reduced prediction efficiency as the filters cannot be adapted precisely to the signal statistics. It is further possible to transmit indices of look-up tables and, in addition, to transmit filter differences compared to the chosen filters from the look-up table.

It is further possible to switch between fixed and adaptive filters. Applying the fixed filter has the advantage that no additional filter information has to be transmitted. Applying the adaptive filter offers the advantage, that the filter is adapted to the signal statistics. The switching between fixed and adaptive filters may be done by applying the rate-distortion criterion that considers also the resulting overhead bit rates.

The described switching can be performed on sequences level (SPS), picture level (PPS), slice level, macroblock level or sub-pel position dependent. The fixed filter can be the standard filter of MPEG-4 AVC or H.264, for example. Different techniques can be applied for the coding of the filter-switch information. One can think of a 15-bit mask where each bit signals fixed or adaptive filter for a certain sub-pel position.

It should be noted that the present invention can be implemented not only as the video coding method, the video decoding method, and devices using the methods, but also as a program causing a computer to execute the video coding method and the video decoding method according to the embodiment of the present invention. Furthermore, the present invention may be implemented as a computer-readable recording medium, such as a Compact Disc-Read Only Memory (CD-ROM), on which the above program is recorded. The present invention can be implemented also as information, data, and signals indicating the program. The program, information, data, and signals can be distributed by a communication network such as the Internet.

It should also be noted that a part or all of elements in the video encoder and the video decoder may be implemented into a single system Large Scale Integration (LSI). The system LSI is a multi-functional LSI in which a plurality of elements are integrated into a single chip. An example of such a system LSI is a computer system including a microprocessor, a ROM, a Random Access Memory (RAM), and the like.

**Industrial Applicability**

The video coding method and the video decoding method according to the present invention can optimize prediction efficiency and coding efficiency, and can be used by, for example, video encoders, video decoders, camcorders, mobile telephones with camera function, and the like.

**Claims**

1. A video coding method of coding video data, by performing motion compensation with sub-pel resolution by using an adaptive interpolation filter for calculating a pixel value of a sub pixel for interpolation between full pixels configuring an input image included in the video data, said video coding method comprising:

   setting a filter property for an adaptive interpolation filter on a predetermined process unit basis, and determining, for each of sub-pel positions relative to a full pixel, a plurality of filter coefficients of the adaptive interpolation filter having the filter property set in said setting;
   performing the motion compensation with sub-pel resolution, by applying the adaptive interpolation filter to the input image, the adaptive interpolating filter having the filter coefficients determined in said determining;
   generating a prediction error, by calculating a difference between the input image and a prediction image generated in said performing of the motion compensation; and
   coding the prediction error generated in said generating.

2. The video coding method according to Claim 1,
   wherein said coding of the prediction error further includes coding the filter property that is set in said setting.

3. The video coding method according to Claim 2,
   wherein the filter property is information indicating a filter type of the adaptive interpolation filter, and
   said coding of the prediction error further includes coding information, the information indicating at least one of: whether the filter type of the adaptive interpolation filter is adaptive or non-adaptive; whether the filter type is separable or non-separable; and whether the filter type is symmetry or asymmetry, the filer type being set in said setting.

4. The video coding method according to Claim 3,
   wherein said coding of the prediction error further includes coding the filter coefficients determined in said determining of a plurality of filter coefficients.

5. The video coding method according to Claim 4,
   wherein said coding of the prediction error includes coding the filter coefficients except redundancies between the filter coefficients, by exploiting symmetry between the filter coefficients.

6.  The video coding method according to Claim 5,
    wherein said coding of the prediction error includes coding a difference between filter coefficients of adaptive interpolation filters of at least two sub pixels that have a symmetry relation with respect to at least one predetermined axis.

7.  The video coding method according to Claim 5,
    wherein said coding of the prediction error includes coding a difference between filter coefficients of adaptive interpolation filters of at least two sub pixels that have a symmetry relation with translation.

8.  The video coding method according to Claim 5,
    wherein said coding of the prediction error includes coding a difference between at least two filter coefficients having a symmetry relation among the filter coefficients, when the filter type of the adaptive interpolation filter is symmetry.

9.  The video coding method according to Claim 5,
    wherein said coding of the prediction error includes coding a plurality of filter coefficients of an adaptive interpolation filter of one of at least two sub pixels that have a symmetry relation with respect to at least one predetermined axis.

10. The video coding method according to Claim 5,
    wherein said coding of the prediction error includes coding one filter coefficient of at least two filter coefficients having a symmetry relation among the filter coefficients, when the filter type of the adaptive interpolation filter is symmetry.

11. The video coding method according to Claim 2,
    wherein the filter property is information indicating a size of the adaptive interpolation filter, and said coding of the prediction error further includes coding information that indicates a size of the adaptive interpolation filter, the size being set in said setting.

12. The video coding method according to Claim 1,
    wherein, in said determining of a plurality of filter coefficients, the filter property for the adaptive interpolation filter is set on a slice-by-slice basis.

13. The video coding method according to Claim 1,
    wherein, in said setting, only one filter property for the adaptive interpolation filter is set for the video data entirely.

14. A video decoding method of decoding a coded stream, by performing motion compensation with sub-pel resolution by using an adaptive interpolation filter for calculating a pixel value of a sub pixel for interpolation between full pixels configuring a reconstructed image reconstructed from the coded stream, said video decoding method comprising:

    decoding a coded prediction error included in the coded stream;
    setting a filter property for an adaptive interpolation filter on a predetermined process unit basis, and determining, for each of sub-pel positions relative to a full pixel, a plurality of filter coefficients of the adaptive interpolation filter having the filter property set in said setting;
    performing motion compensation with sub-pel resolution, by applying the adaptive interpolation filter to a reconstructed image that is previously generated, the adaptive interpolating filter having the filter coefficients determined in said determining; and
    generating a reconstructed image, by adding a prediction image that is generated in said performing of motion compensation with the coded prediction error that is decoded in said decoding of a coded prediction error.

15. The video decoding method according to Claim 14,
    wherein said decoding of a coded prediction error further includes decoding the filter property for each of adaptive interpolation filters included in the coded stream, and
    in said determining of a plurality of filter coefficients, the filter coefficients are determined for each of the sub-pel positions relative to the full pixel, according to the filter property that is decoded in said decoding of the filter property.

16. The video decoding method according to Claim 15,
    wherein said decoding of a coded prediction error includes decoding information, the information indicating at least one of: whether a filter type of the adaptive interpolation filter is adaptive or non-adaptive; whether the filter type is separable or non-separable; and whether the filter type is symmetry or asymmetry, and
    in said determining of a plurality of filter coefficients, the filter coefficients are determined for each of the sub-pel positions relative to the full pixel, according to the filter type of the adaptive interpolation filter.

17. The video decoding method according to Claim 16,
wherein said decoding of a coded prediction error further includes decoding a plurality of filter coefficients of each of the adaptive interpolation filters included in the coded stream, and
in said determining of a plurality of filter coefficients, filter coefficients that are previously decoded in said decoding of a plurality of filter coefficients are determined as the filter coefficients determined for each of the sub-pel positions relative to the full pixel.

18. The video decoding method according to Claim 17,
wherein said decoding of a coded prediction error includes decoding the filter coefficients from the coded stream, by exploiting symmetry between the filter coefficients, the coded stream having the filter coefficients that are coded except redundancies between the filter coefficients, and
in said determining of a plurality of filter coefficients, the filter coefficients decoded in said decoding of a coded prediction error are determined as the filter coefficients determined for each of the sub-pel positions relative to the full pixel.

19. The video decoding method according to Claim 18,
wherein said decoding of a coded prediction error includes decoding a difference and a target filter coefficient from the coded stream, the difference being between filter coefficients of adaptive interpolation filters of at least two sub pixels that have a symmetry relation with respect to at least one predetermined axis, the target filter coefficient being of an adaptive interpolation filter of one of the at least two sub pixels, the coded stream having the difference and the target filter coefficient which are coded, and
said determining of a plurality of filter coefficients includes determining a filter coefficient of an adaptive interpolation filter of another sub pixel of the at least two sub pixels that have the symmetry relation with respect to the at least one predetermined axis, by adding the difference and the target filter coefficient together which are decoded in said decoding of a difference and a target filter coefficient.

20. The video decoding method according to Claim 18,
wherein said decoding of a coded prediction error includes decoding a difference and a target filter coefficient from the coded stream, the difference being between filter coefficients of adaptive interpolation filters of at least two sub pixels that have a symmetry relation with translation, the target filter coefficient being of an adaptive interpolation filter of one of the at least two sub pixels, the coded stream having the difference and the target filter coefficient which are coded, and
said determining of a plurality of filter coefficients includes determining a filter coefficient of an adaptive interpolation filter of another sub pixel of the at least two sub pixels that have the symmetry relation with translation, by adding the difference and the target filter coefficient together which are decoded in said decoding of a difference and a target filter coefficient.

21. The video decoding method according to Claim 18,
wherein said decoding of a coded prediction error includes decoding a difference and a target filter coefficient from the coded stream when the filter type of the adaptive interpolation filter is symmetry, the difference being between at least two filter coefficients that have a symmetry relation among the plurality of filter coefficients, the target filter coefficient being one of the at least two filter coefficients, the coded stream having the difference and the target filter coefficient which are coded, and
said determining of a plurality of filter coefficients includes determining another filter coefficient of the at least two filter coefficients that have the symmetry relation, by adding the difference and the target filter coefficient together which are decoded in said decoding of a difference and a target filter coefficient.

22. The video decoding method according to Claim 18,
wherein said decoding of a coded prediction error includes decoding a target filter coefficient of an adaptive interpolation filter of one of sub pixels that have a symmetry relation with respect to at least one predetermined axis and that are coded as sets each having at least two sub pixels, and
said determining of a plurality of filter coefficients includes determining a filter coefficient of an adaptive interpolation filter of another sub pixel of the sub pixels that have the symmetry relation with respect to the at least one predetermined axis, according to the target filter coefficient decoded in said decoding of a target filter coefficient.

23. The video decoding method according to Claim 18,

wherein said decoding of a coded prediction error includes decoding one filter coefficient of at least two filter coefficients that have a symmetry relation among the filter coefficients, when the filter type of the adaptive interpolation filter is symmetry, the filter coefficients being coded as sets each having at least two filter coefficients, and said determining of a plurality of filter coefficients includes determining another filter coefficient of the at least two filter coefficients that have the symmetry relation, according to the one filter coefficient decoded in said decoding of one filter coefficient.

24. The video decoding method according to Claim 17,
wherein said determining of a plurality of filter coefficients further includes: holding the filter property and the filter coefficients to a memory; and updating the filter property and the filter coefficients in the memory to a new filter property that is newly set in said setting and new filter coefficients that are newly determined in said determining, when the new filter property and the new filter coefficients are decoded in said decoding of a coded prediction error.

25. The video decoding method according to Claim 15,
wherein said decoding of a coded prediction error includes decoding information indicating a size of the adaptive interpolation filter, and
in said determining of a plurality of filter coefficients, the filter coefficients are determined for each of the sub-pel positions relative to the full pixel, according to the size of the adaptive interpolation filter.

26. The video decoding method according to Claim 14,
wherein, in said determining of a plurality of filter coefficients, the filter property for the adaptive interpolation filter is set on a slice-by-slice basis.

27. The video decoding method according to Claim 14,
wherein, in said setting, only one filter property is set for all adaptive interpolation filters of video data included in the coded stream.

28. A video coding device that codes video data, by performing motion compensation with sub-pel resolution by using an adaptive interpolation filter for calculating a pixel value of a sub pixel for interpolation between full pixels configuring an input image included in the video data, said video coding device comprising:

a motion compensation unit configured to (i) set a filter property for an adaptive interpolation filter on a predetermined process unit basis, and determining, for each of sub-pel positions relative to a full pixel, a plurality of filter coefficients of the adaptive interpolation filter having the set filter property, and (ii) perform the motion compensation with sub-pel resolution, by applying the adaptive interpolation filter to the input image, the adaptive interpolating filter having the determined filter coefficients;
a subtraction unit configured to generate a prediction error, by subtracting, from the input image, a prediction image generated in the motion compensation; and
a coding unit configured to code the prediction error generated by said subtraction unit.

29. A video decoding device that decodes a coded stream, by performing motion compensation with sub-pel resolution by using an adaptive interpolation filter for calculating a pixel value of a sub pixel for interpolation between full pixels configuring a reconstructed image reconstructed from the coded stream, said video decoding device comprising:

a decoding unit configured to decode a coded prediction error included in the coded stream;
a motion compensation unit configured to (i) set a filter property for an adaptive interpolation filter on a predetermined process unit basis, and determining, for each of sub-pel positions relative to a full pixel, a plurality of filter coefficients of the adaptive interpolation filter having the set filter property, and (ii) perform motion compensation with sub-pel resolution, by applying the adaptive interpolation filter to a reconstructed image that is previously generated, the adaptive interpolating filter having the determined filter coefficients; and
an addition unit configured to generate a reconstructed image, by adding a prediction image that is generated by said motion compensation unit with the coded prediction error that is decoded by said decoding unit.

30. A program causing a computer to execute a video coding method of coding video data, by performing motion compensation with sub-pel resolution by using an adaptive interpolation filter for calculating a pixel value of a sub pixel for interpolation between full pixels configuring an input image included in the video data, said computer comprising:

setting a filter property for an adaptive interpolation filter on a predetermined process unit basis, and determining, for each of sub-pel positions relative to a full pixel, a plurality of filter coefficients of the adaptive interpolation filter having the filter property set in said setting;

performing the motion compensation with sub-pel resolution, by applying the adaptive interpolation filter to the input image, the adaptive interpolating filter having the filter coefficients determined in said determining;

generating a prediction error, by subtracting, from the input image, a prediction image generated in said performing of the motion compensation; and

coding the prediction error generated in said generating.

31. A program causing a computer to execute a video decoding method of decoding a coded stream, by performing motion compensation with sub-pel resolution by using an adaptive interpolation filter for calculating a pixel value of a sub pixel for interpolation between full pixels configuring a reconstructed image reconstructed from the coded stream, said computer comprising:

decoding a coded prediction error included in the coded stream;

setting a filter property for an adaptive interpolation filter on a predetermined process unit basis, and determining, for each of sub-pel positions relative to a full pixel, a plurality of filter coefficients of the adaptive interpolation filter having the filter property set in said setting;

performing motion compensation with sub-pel resolution, by applying the adaptive interpolation filter to a reconstructed image that is previously generated, the adaptive interpolating filter having the filter coefficients determined in said determining; and

generating a reconstructed image, by adding a prediction image that is generated in said performing of motion compensation with the coded prediction error that is decoded in said decoding of a coded prediction error.

32. An integration circuit that codes video data, by performing motion compensation with sub-pel resolution by using an adaptive interpolation filter for calculating a pixel value of a sub pixel for interpolation between full pixels configuring an input image included in the video data, said integration circuit comprising:

a motion compensation unit configured to (i) set a filter property for an adaptive interpolation filter on a predetermined process unit basis, and determining, for each of sub-pel positions relative to a full pixel, a plurality of filter coefficients of the adaptive interpolation filter having the set filter property, and (ii) perform the motion compensation with sub-pel resolution, by applying the adaptive interpolation filter to the input image, the adaptive interpolating filter having the determined filter coefficients;

a subtraction unit configured to generate a prediction error, by subtracting, from the input image, a prediction image generated in the motion compensation; and

a coding unit configured to code the prediction error generated by said subtraction unit.

33. An integration circuit that decodes a coded stream, by performing motion compensation with sub-pel resolution by using an adaptive interpolation filter for calculating a pixel value of a sub pixel for interpolation between full pixels configuring a reconstructed image reconstructed from the coded stream, said integration circuit comprising:

a decoding unit configured to decode a coded prediction error included in the coded stream;

a motion compensation unit configured to (i) set a filter property for an adaptive interpolation filter on a predetermined process unit basis, and determining, for each of sub-pel positions relative to a full pixel, a plurality of filter coefficients of the adaptive interpolation filter having the set filter property, and (ii) perform motion compensation with sub-pel resolution, by applying the adaptive interpolation filter to a reconstructed image that is previously generated, the adaptive interpolating filter having the determined filter coefficients; and

an addition unit configured to generate a reconstructed image, by adding a prediction image that is generated by said motion compensation unit with the coded prediction error that is decoded by said decoding unit.

# FIG. 1

Input Signal → 110 → Prediction Error → Transformation/Quantization Unit (120) → Quantized Coefficients → Entropy Coding Unit (390) → Coded Signal

Inverse Quantization/Inverse Transformation Unit (130)

135

Deblocking Filter (137)

Memory (140)

Intra-Picture Prediction Unit (150)

Motion Compensation Prediction Unit (360)

Intra/Inter Switch (180)

Motion Estimation Unit (170)

Motion Data

Prediction Signal

300

FIG. 2

Input Signal → Entropy Decoding Unit (491) → Quantized Coefficients → Inverse Quantization/Inverse Transformation Unit (230) → Prediction Error → (+) (235) → Deblocking Filter (237) → Decoded Signal

Prediction Signal

Intra-Picture Prediction Unit (250)

Motion Compensation Prediction Unit (460)

Memory (240)

Intra/Inter Switch (280)

Motion Data

400

# FIG. 3

Input Signal → (+) 110 → Prediction Error → Transformation/Quantization Unit 120 → Quantized Coefficients → Entropy Coding Unit 190 → Coded Signal

Prediction Signal

Inverse Quantization/Inverse Transformation Unit 130 → (+) 135

Intra-Picture Prediction Unit 150

Deblocking Filter 137

Motion Compensation Prediction Unit (Adaptive Filter) 160

Memory 161

Memory 140

Intra/Inter Switch 180

Filter Coefficients

Motion Estimation Unit 170

Motion Data

100

EP 2 187 649 A1

FIG. 4

EP 2 187 649 A1

# FIG. 5

```
                    ┌─────────────┐
                    │    START    │
                    └──────┬──────┘
                           ▼
          ┌────────────────────────────────┐  ┌─ S101
          │ Determine filter type of       │─╱
          │ adaptive interpolation filter  │
          └────────────────┬───────────────┘
                           ▼
          ┌────────────────────────────────┐  ┌─ S102
          │ Determine the number of taps   │─╱
          │ of adaptive interpolation filter│
          └────────────────┬───────────────┘
                           ▼
          ┌────────────────────────────────┐  ┌─ S103
          │ Determine filter coefficients of│─╱
          │ adaptive interpolation filter  │
          └────────────────┬───────────────┘
                           ▼
          ┌────────────────────────────────┐  ┌─ S104
          │ Perform motion compensation    │─╱
          └────────────────┬───────────────┘
                           ▼
          ┌────────────────────────────────┐  ┌─ S105
          │ Generate prediction error      │─╱
          │ signal                         │
          └────────────────┬───────────────┘
                           ▼
          ┌────────────────────────────────┐  ┌─ S106
          │ Quantize prediction error      │─╱
          │ signal                         │
          └────────────────┬───────────────┘
                           ▼
          ┌────────────────────────────────┐  ┌─ S107
          │ Code quantized prediction      │─╱
          │ error signal and adaptive      │
          │ interpolation filter           │
          └────────────────┬───────────────┘
                           ▼
                    ┌─────────────┐
                    │     END     │
                    └─────────────┘
```

FIG. 6A

START

Decode coded bitstream — S201

Perform inverse quantization and inverse transformation on decoded quantized coefficients — S202

Perform motion compensation based on decoded interpolation filters — S203

Reconstruct image — S204

END

FIG. 6B

START

Is filter itself in symmetry? — S301

Yes → Decode and mirror a half of filter coefficients — S302

No ↓ Decode one filter — S303

Mirror decoded filter based on positional symmetry — S304

Have all filters been processed? — S305

No

↓Yes

END

# FIG. 7

# FIG. 8

$f^{(p,q)}_{-2,-2}$ $f^{(p,q)}_{-1,-2}$ $f^{(p,q)}_{0,-2}$ $f^{(p,q)}_{1,-2}$ $f^{(p,q)}_{2,-2}$ $f^{(p,q)}_{3,-2}$

$f^{(p,q)}_{-2,-1}$ $f^{(p,q)}_{-1,-1}$ $f^{(p,q)}_{0,-1}$ $f^{(p,q)}_{1,-1}$ $f^{(p,q)}_{2,-1}$ $f^{(p,q)}_{3,-1}$

$f^{(p,q)}_{-2,0}$ $f^{(p,q)}_{-1,0}$ $f^{(p,q)}_{0,0}$ $f^{(p,q)}_{1,0}$ $f^{(p,q)}_{2,0}$ $f^{(p,q)}_{3,0}$ → i

(p,q) — Full-Pel Range

$f^{(p,q)}_{-2,1}$ $f^{(p,q)}_{-1,1}$ $f^{(p,q)}_{0,1}$ $f^{(p,q)}_{1,1}$ $f^{(p,q)}_{2,1}$ $f^{(p,q)}_{3,1}$

$f^{(p,q)}_{-2,2}$ $f^{(p,q)}_{-1,2}$ $f^{(p,q)}_{0,2}$ $f^{(p,q)}_{1,2}$ $f^{(p,q)}_{2,2}$ $f^{(p,q)}_{3,2}$

$f^{(p,q)}_{-2,3}$ $f^{(p,q)}_{-1,3}$ $f^{(p,q)}_{0,3}$ $f^{(p,q)}_{1,3}$ $f^{(p,q)}_{2,3}$ $f^{(p,q)}_{3,3}$

j

FIG. 9

FIG. 10

EP 2 187 649 A1

FIG. 11

## FIG. 12

(a)
filter
coefficient

(b)
filter
coefficient

FIG. 13A

FIG. 13B

FIG. 13C

FIG. 13D

FIG. 13E

FIG. 13F

EP 2 187 649 A1

FIG. 14A    FIG. 14B    FIG. 14C

FIG. 14D    FIG. 14E    FIG. 14F    FIG. 14G

EP 2 187 649 A1

## FIG. 15

| slice_header( ) { | C | Descriptor |
|---|---|---|
| first_mb_in_slice | 2 | ue(v) |
| slice_type | 2 | ue(v) |
| pic_parameter_set_id | 2 | ue(v) |
| if( separate_colour_plane_flag = = 1 ) | | |
| colour_plane_id | 2 | u(2) |
| frame_num | 2 | u(v) |
| if( !frame_mbs_only_flag ) { | | |
| field_pic_flag | 2 | u(1) |
| if( field_pic_flag ) | | |
| bottom_field_flag | 2 | u(1) |
| } | | |
| if( nal_unit_type = = 5 ) | | |
| idr_pic_id | 2 | ue(v) |
| if( pic_order_cnt_type = = 0 ) { | | |
| pic_order_cnt_lsb | 2 | u(v) |
| if( pic_order_cnt_type = = 1 && !field_pic_flag ) | | |
| delta_pic_order_cnt_bottom | 2 | se(v) |
| } | | |
| if( pic_order_cnt_type = = 1 && !delta_pic_order_always_zero_flag ) { | | |
| delta_pic_order_cnt[0] | 2 | se(v) |
| if( pic_order_present_flag && !field_pic_flag ) | | |
| delta_pic_order_cnt[1] | 2 | se(v) |
| } | | |
| if( redundant_pic_cnt_present_flag ) | | |
| redundant_pic_cnt | 2 | ue(v) |
| if( slice_type = = B ) | | |
| direct_spatial_mv_pred_flag | 2 | u(1) |
| if( slice_type = = P || slice_type = = SP || slice_type = = B ) { | | |
| num_ref_idx_active_override_flag | 2 | u(1) |
| if( num_ref_idx_active_override_flag ) { | | |
| num_ref_idx_l0_active_minus1 | 2 | ue(v) |
| if( slice_type = = B ) | | |
| num_ref_idx_l1_active_minus1 | 2 | ue(v) |
| } | | |
| } | | |
| ref_pic_list_reordering( ) | 2 | |
| if( ( weighted_pred_flag && ( slice_type = = P || slice_type = = SP ) ) || ( weighted_bipred_idc = = 1 && slice_type = = B ) ) | | |
| pred_weight_table( ) | 2 | |
| if( nal_ref_idc != 0 ) | | |
| dec_ref_pic_marking( ) | 2 | |
| if( entropy_coding_mode_flag && slice_type != I && slice_type != SI ) | | |
| cabac_init_idc | 2 | ue(v) |
| slice_qp_delta | 2 | se(v) |

| | C | Descriptor |
|---|---|---|
| if( slice_type = = SP || slice_type = = SI ) { | | |
| if( slice_type = = SP ) | | |
| sp_for_switch_flag | 2 | u(1) |
| slice_qs_delta | 2 | se(v) |
| } | | |
| if( deblocking_filter_control_present_flag ) { | | |
| disable_deblocking_filter_idc | 2 | ue(v) |
| if( disable_deblocking_filter_idc != 1 ) { | | |
| slice_alpha_c0_offset_div2 | 2 | se(v) |
| slice_beta_offset_div2 | 2 | se(v) |
| } | | |
| } | | |
| if( num_slice_groups_minus1 > 0 && slice_group_map_type >= 3 && slice_group_map_type <= 5) | | |
| slice_group_change_cycle | 2 | u(v) |
| if( slice_type = = P || slice_type = = B ) { | | |
| apply_adaptive_filter | 2 | u(1) |
| if( apply_adaptive_filter = = 1 ) { | | |
| slice_filter_type | 2 | u(1) |
| apply_symmetric_filter | 2 | u(1) |
| use_all_subpel_positions | 2 | u(1) |
| if(!use_all_subpel_positions) | | |
| positions_pattern | 2 | ue(v) |
| if( slice_filter_type = = 0) /* non-separable filter */ | | |
| for( sub_pel = 0; sub_pel < max_sub_pel_pos; sub_pel++ ) | | |
| if( use_all_subpel_positions || positions_pattern & ( 1 << sub_pel ) ) | | |
| for( i = 0; i < filter_length * filter_length; i++ ) | | |
| filter_coeff[ sub_pel ][ i ] | 2 | se(v) |
| else../* separable filter */ | | |
| for( sub_pel = 0; sub_pel < max_sub_pel_pos; sub_pel++ ) | | |
| if( use_all_subpel_positions || positions_pattern & ( 1 << sub_pel ) ) | | |
| for( j = 0; j < 2; j++ ) | | |
| for( i = 0; i < filter_length; i++ ) | | |
| filter_coeff[ sub_pel ][ j ][ i ] | 2 | se(v) |
| } | | |
| } | | |
| } | | |

EP 2 187 649 A1

FIG. 16A

FIG. 16B

FIG. 16C

# FIG. 17

| slice_header( ) { | C | Descriptor |
|---|---|---|
| ... | | |
|   if( num_slice_groups_minus1 > 0 &&<br>    slice_group_map_type >= 3 && slice_group_map_type <= 5) | | |
|     **slice_group_change_cycle** | 2 | u(v) |
|   if( slice_type = = P || slice_type = = B ) { | | |
|     **apply_adaptive_filter** | 2 | u(1) |
|     if( apply_adaptive_filter = = 1 ) { | | |
|       **slice_filter_type** | 2 | u(1) |
|       for( sub_pel = 0; sub_pel < 15; sub_pel ++ ) | | |
|         **filter_id [sub_pel]** | 2 | ue(v) |
|       if( slice_filter_type = = 0) /* non-separable filter | | |
|         for( filter_num = 0; filter_num < max_filter_num; filter_num++ ) { | | |
|           **filter_length[filter_num]** | 2 | ue(v) |
|           for( i = 0; i < filter_length[filter_num] * filter_length[filter_num]; i++ ) | | |
|             **filter_coef[ filter_num ][ i ]** | 2 | se(v) |
|         } | | |
|       else../* separable filter */ | | |
|         for( filter_num = 0; filter_num < max_filter_num; filter_num++ ) { | | |
|           **filter_length[filter_num]** | 2 | ue(v) |
|           for( j = 0; j < 2; j++ ) | | |
|             for( i = 0; i < filter_length[filter_num]; i++ ) | | |
|               **filter_coef[ filter_num ][ j ][ i ]** | 2 | se(v) |
|         } | | |
|       } | | |
|     } | | |
| } | | |

EP 2 187 649 A1

## FIG. 18

| slice_header( ) { | C | Descriptor |
|---|---|---|
| ... | 2 | ue(v) |
| if( num_slice_groups_minus1 > 0 && slice_group_map_type >= 3 && slice_group_map_type <= 5) | | |
| **slice_group_change_cycle** | 2 | u(v) |
| if( slice_type = = P \|\| slice_type = = B ) { | | |
| **apply_adaptive_filter** | 2 | u(1) |
| if( apply_adaptive_filter = = 1 ) { | | |
| **slice_filter_type** | 2 | u(1) |
| **symmetry_mask** | 2 | u(15) |
| if( slice_filter_type = = 0) /* non-separable filter | | |
| for( filter_num = 0; filter_num < max_filter_num; filter_num++ ) { | | |
| **filter_length[filter_num]** | 2 | ue(v) |
| for( i = 0; i < filter_length[filter_num] * filter_length[filter_num]; i++ ) | | |
| **filter_coef[ filter_num ][ i ]** | 2 | se(v) |
| } | | |
| else../* separable filter */ | | |
| for( filter_num = 0; filter_num < max_filter_num; filter_num++ ) { | | |
| **filter_length[filter_num]** | 2 | ue(v) |
| for( j = 0; j < 2; j++ ) | | |
| for( i = 0; i < filter_length[filter_num]; i++ ) | | |
| **filter_coef[ filter_num ][ j ][ i ]** | 2 | se(v) |
| } | | |
| } | | |
| } | | |
| } | | |

EP 2 187 649 A1

## FIG. 19

| slice_header( ) { | C | Descriptor |
|---|---|---|
| ... | | |
|    if( num_slice_groups_minus1 > 0  &&<br>      slice_group_map_type >= 3  &&  slice_group_map_type <= 5) | | |
|       **slice_group_change_cycle** | 2 | u(v) |
|   if( slice_type  = =  P  \|\|  slice_type  = =  B ) { | | |
|       **apply_adaptive_filter** | 2 | u(1) |
|      if( apply_adaptive_filter = = 1 ) { | | |
|         **filter_type** | 2 | ue(v) |
|         **symmetry_type** | 2 | ue(v) |
|         **full_pel_row_column_interpolation_type** | 2 | u(2) |
|       if(filter_type  = =  0)  /* non-separable filter | | |
|         for( filter_num = 0; filter_num < max_filter_num; filter_num++ ) { | | |
|           **filter_length[filter_num]** | 2 | ue(v) |
|           for( i = 0; i < filter_length[filter_num] * filter_length[filter_num]; i++ ) | | |
|             **filter_coef[ filter_num ][ i ]** | 2 | se(v) |
|         } | | |
|       else../* separable filter */ | | |
|         for( filter_num = 0; filter_num < max_filter_num; filter_num++ ) { | | |
|           **filter_length[filter_num]** | 2 | ue(v) |
|           for( j = 0; j < 2; j++ ) | | |
|             for( i = 0; i < filter_length[filter_num]; i++ ) | | |
|               **filter_coef[ filter_num ][ j ][ i ]** | 2 | se(v) |
|         } | | |
|      } | | |
|   } | | |
| } | | |

EP 2 187 649 A1

# FIG. 20

| slice_header( ) { | C | Descriptor |
|---|---|---|
| ... | | |
| if( num_slice_groups_minus1 > 0 &&<br>slice_group_map_type >= 3 && slice_group_map_type <= 5) | | |
| **slice_group_change_cycle** | 2 | u(v) |
| if( slice_type = = P \|\| slice_type = = B ) { | | |
| **apply_adaptive_filter** | 2 | u(1) |
| if( apply_adaptive_filter = = 1 ) { | | |
| **pos_of_non_sep_filter** | 2 | ue(v) |
| for( i = 0; i < filter_length * filter_length; i++ ) | | |
| **filter_coef_non_sep[ i ]** ../* non-separable filter coefs */ | 2 | se(v) |
| for( filter_num = 0; filter_num < 14; filter_num++ ) | | |
| for( j = 0; j < 2; j++ ) | | |
| for( i = 0; i < filter_length; i++ ) | | |
| **filter_coef_sep[ filter_num ][ j ][ i ]** ../* separable filter coefs */ | 2 | se(v) |
| } | | |
| } | | |
| } | | |

EP 2 187 649 A1

<table>
<tr><td colspan="2" align="center">**INTERNATIONAL SEARCH REPORT**</td><td>International application No.</td></tr>
<tr><td colspan="2"></td><td>PCT/JP2008/002887</td></tr>
</table>

| A. CLASSIFICATION OF SUBJECT MATTER |
|---|
| *H04N7/32*(2006.01)i, *H04N1/41*(2006.01)i |

According to International Patent Classification (IPC) or to both national classification and IPC

| B. FIELDS SEARCHED |
|---|
| Minimum documentation searched (classification system followed by classification symbols) |
| H04N7/32, H04N1/41 |

| Documentation searched other than minimum documentation to the extent that such documents are included in the fields searched |
|---|
| Jitsuyo Shinan Koho        1922-1996    Jitsuyo Shinan Toroku Koho    1996-2008 |
| Kokai Jitsuyo Shinan Koho  1971-2008    Toroku Jitsuyo Shinan Koho    1994-2008 |

| Electronic data base consulted during the international search (name of data base and, where practicable, search terms used) |
|---|
|  |

**C. DOCUMENTS CONSIDERED TO BE RELEVANT**

| Category* | Citation of document, with indication, where appropriate, of the relevant passages | Relevant to claim No. |
|---|---|---|
| Y | JP 2006-50471 A  (Sony Corp.), | 1-2,11-15, |
|  | 16 February, 2006 (16.02.06), | 25-33 |
| A | Par. Nos. [0102] to [0105], [0123] | 3-10,16-24 |
|  | (Family: none) |  |
|  |  |  |
| Y | JP 2003-319398 A  (NEC Corp.), | 1-2,11-15, |
|  | 07 November, 2003 (07.11.03), | 25-33 |
| A | Par. Nos. [0001], [0010] to [0011], [0026] to | 3-10,16-24 |
|  | [0031], [0036] to [0052] |  |
|  | & US 2005/0105617 A1     & EP 1499134 A1 |  |
|  | & WO 2003/092300 A1      & CN 1625902 A |  |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance |  |  |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
|---|---|
| 27 October, 2008 (27.10.08) | 04 November, 2008 (04.11.08) |

| Name and mailing address of the ISA/ | Authorized officer |
|---|---|
| Japanese Patent Office |  |
| Facsimile No. | Telephone No. |

Form PCT/ISA/210 (second sheet) (April 2007)

**EP 2 187 649 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060294171 A